# EUROPÄISCHE PATENTSCHRIFT

(11) **EP 3 585 562 B1**
(45) Veröffentlichungstag und Bekanntmachung des Hinweises auf die Patenterteilung: **12.07.2023**
(21) Anmeldenummer: 18707671.6
(22) Anmeldetag: 20.02.2018
(51) Int. Cl.: B24B 13/005

(54) **BLOCKEN VON LINSEN**
BLOCKING OF LENSES
BLOCAGE DE LENTILLES

(30) Priorität: 24.02.2017 DE 102017001794
(43) Veröffentlichungstag der Anmeldung: 01.01.2020
(73) Patentinhaber: Schneider GmbH & Co. KG, 35112 Fronhausen (DE)
(72) Erfinder: SCHNEIDER, Gunter, 35037 Marburg (DE); HUTTENHUIS, Stephan, 35096 Niederweimar (DE); SCHNEIDER, Benjamin, 35102 Lohra (DE)
(74) Vertreter: Von Rohr Patentanwälte Partnerschaft mbB
(86) Internationale Anmeldenummer: PCT/EP2018/054099
(87) Internationale Veröffentlichungsnummer: WO 2018/153837

(56) Entgegenhaltungen:
- DE-A1-102008 023 093
- DE-A1-102014 003 539
- DE-A1-102014 015 200
- US-A- 5 885 700
- US-A1- 2003 214 058
- US-A1- 2008 055 542
- US-A1- 2015 138 501
- Satisloh: "Layoutblocker-PRA High-production alloy-blocking with optical recognition", , 30. April 2012 (2012-04-30), Seiten 1-2, XP055487461, CH-6340 Baar Switzerland Gefunden im Internet: URL:http://www.satisloh.com/uploads/media/ Info_LayoutblockerPRA_en.pdf [gefunden am 2018-06-25]

## Beschreibung

Die Erfindung betrifft ein Verfahren zum Blocken von Linsen, insbesondere Brillengläsern, gemäß Anspruch 1 und eine Vorrichtung zum Blocken von Linsen, insbesondere Brillensondere gemäß Anspruch 8.

Linsen, insbesondere optische Linsen, ganz besonders Brillengläser, werden zur (weiteren) Bearbeitung und/oder (weiteren) Beschichtung üblicherweise an einem sogenannten Blockstück als Halter mittels eines sogenannten Blockmaterials geblockt, d. h. mit einer fertigen oder noch zu bearbeitenden Seite mit dem Blockstück form-. stoff- und/oder kraftschlüssig verbunden und somit am Blockstück befestigt. Das Blockstück ist aus Metall und/oder Kunststoff hergestellt und dient insbesondere dazu, die daran befestigte - also geblockte - Linse präzise und definiert für eine oder mehrere Bearbeitung/en und/oder Beschichtung/en zu halten. Das durch das Blocken resultierende Blockstück-Linsen-Paar kann in einer Bearbeitungsmaschine und/oder Beschichtungsanlage am Blockstück gehalten werden.

Insbesondere kann ein geblocktes Brillenglas an seiner Rück- und/oder Frontfläche im Hinblick auf seine optische Wirkung und/oder am Rand zur Einpassung in ein zugeordnetes Brillengestell mit geometrisch bestimmter (Fräsen/Drehen) oder geometrisch unbestimmter (Schleifen/Polieren) Schneide spanend bearbeitet und/oder auf seiner Rück- und/oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet werden. Ein solches Brillenglas kann bereits vor dem Blocken an einer oder beiden optisch wirksamen Fläche und/oder am Rand bearbeitet und/oder beschichtet werden.

Unter Brillengläsern sind optische Linsen bzw. Linsenrohlinge (Blanks) für Brillen aus den gebräuchlichen transparenten Materialien, wie Kunststoff (z. B. Polycarbonat, CR-39, Hi-Index) oder Mineralglas, und mit beliebiger (Vor-)Form des Umfangsrandes der Linse bzw. des Linsenrohlings zu verstehen. Solche Brillengläser können auf der Fläche, an der sie geblockt werden, mit einer Folie, einem Lack oder dergleichen versehen sein, um diese Fläche vor Verunreinigung und Beschädigung zu schützen und/oder die Haftungseigenschaften zwischen Brillenglas und Blockmaterial zu verbessern.

Im Folgenden wird der Begriff "Linse" sowohl für eine Linse verwendet, die vorab an einer Seite (Rück- oder Frontfläche) bearbeitet und/oder beschichtet wurde und bei der die andere Seite noch zu bearbeiten und/oder zu beschichten ist, als auch für eine Linse, die noch an beiden Seiten zu bearbeiten und/oder zu beschichten ist.

Als Blockmaterial können Metalllegierungen mit niedriger Schmelztemperatur (z. B. Alloy) oder Thermoplaste, also thermoplastische Materialien, oder nicht-thermoplastische Materialien, insbesondere aushärtende Klebstoffe (z. B. lichtaushärtbare Kleber), aber auch Klebebänder oder dergleichen eingesetzt werden. Je nach eingesetztem Blockmaterial ergeben sich unterschiedliche Anforderungen bzw. Verfahrensabläufe beim Blocken.

Im Fokus der vorliegenden Erfindung steht das Blocken einer Linse ohne Auflageringe. Dabei wird die Linse bzw. eine Seite der Linse unmittelbar mit einem mit Blockmaterial versehenen Blockstück verbunden bzw. daran geblockt.

Außerdem steht im Fokus der vorliegenden Erfindung das Blocken einer Linse, bei dem mittels eines Blockmaterials eine ausschließlich stoffschlüssige Verbindung zwischen der Linse und genau einem Blockstück hergestellt wird. Aus diesem Blocken resultiert ein Blockstück-Linsen-Paar mit genau einer Linse und genau einem Blockstück. Dieses Blocken dient dazu, dass das resultierende Blockstück-Linsen-Paar in einer Bearbeitungsmaschine und/oder Beschichtungsanlage am Blockstück gehalten und eine optisch wirksame Fläche bzw. eine Rück- und/oder Frontfläche der Linse bearbeitet und/oder beschichtet werden kann. Eine Randbearbeitung zum Einpassen in ein Brillengestell ist also nicht bezweckt.

Im Vergleich zur Randbearbeitung muss das Blockstück-Linsen-Paar bei einer Flächenbearbeitung höheren Kräften und in anderen Richtungen wirkenden Kräften standhalten. Insbesondere müssen die Linse und das Blockstück starr, also auch zueinander drehfest, miteinander verbunden sein. Das Blockstück darf durch die bei der Flächenbearbeitung auf die Linse ausgeübten Kräfte nicht verformt werden bzw. nicht verformbar sein. Ein für dieses Blocken geeignetes Blockstück hat einen Durchmesser, der größer als der Durchmesser der letztlich erzeugten Gebrauchsfläche der Linse ist.

An dem Unterteil des Blockstücks kann das Blockstück-Linsen-Paar zum Bearbeiten und/oder Beschichten der Linse in einem Werkstückfutter Bearbeitungsvorrichtung und/oder Beschichtungsvorrichtung gehalten werden, wobei das Blockstück-Linsen-Paar von dem Werkstückfutter lösbar ist.

Für die (weitere) Bearbeitung und/oder (weitere) Beschichtung einer Linse, für den Blockmaterialverbrauch, für die Stabilität der Verbindung zwischen Linse und Blockstück und für die Reduzierung von Schrumpfungen im Blockmaterial ist es vorteilhaft, die Linse möglichst präzise relativ zum Blockstück auszurichten. Dabei wird unter dem Begriff "ausrichten" das Drehen bzw. Kippen bzw. Rotieren der Linse im Raum um drei typischerweise senkrecht zueinander stehender Drehachsen bzw. Kippachsen bzw. Rotationsachsen - häufig als A-, B- bzw. C-Achse bezeichnet - in eine definierte Drehlage verstanden.

Aus der DE 10 2008 023 093 A1 ist eine Vorrichtung zum Blocken von Brillengläsern bekannt. Diese hat eine Messstation zum Erfassen von Orientierung und Geometrieinformationen eines zu blockenden Brillenglases und eine Blockstation, in der das Brillenglas mittels eines temporär verformbaren Blockmaterials auf einem Blockstück aufblockbar ist. Die bekannte Blockvorrichtung hat außerdem eine einen Haltekopf für das Brillenglas aufweisende Transporteinrichtung, mittels welcher eine Relativbewegung zwischen dem am Haltekopf gehaltenen Brillenglas einerseits und der Messstation sowie der Blockstation andererseits erzeugbar ist. Um einen möglichst universellen Einsatz der Blockvorrichtung zu ermöglichen, weist die Transporteinrichtung mindestens vier lagegeregelte Bewegungsachsen auf, mittels welcher das Brillenglas unter Berücksichtigung der in der Messstation erfassten Orientierung und Geometrieinformationen des Brillenglases relativ zu einem sich in der Blockstation befindenden Blockstück definiert positionierbar und während des Aufblockens in der definierten Relativlage zum Blockstück unter Belassung eines Blockmaterial-Aufnahmespalts zwischen Brillenglas und Blockstück haltbar ist.

Bei der bekannten Blockvorrichtung wird das zu blockende Brillenglas mittels des Haltekopfs der Transporteinrichtung aus der Messstation entnommen und anschließend mittels des Haltekopfs ausgerichtet. Dazu ist der Haltekopf im Raum im Drehwinkel geregelt um drei senkrecht zueinander stehende Drehachsen in eine definierte Drehlage drehbar. Dann wird das Brillenglas mittels der Transporteinrichtung zu einem in der Blockstation befindlichen Blockstück bewegt und dabei in der definierten Drehlage am Haltekopf gehalten. Schließlich wird die Linse auf das Blockstück aufgeblockt.

Eine Aufgabe der vorliegenden Erfindung ist es, die bekannte Blockvorrichtung bzw. das bekannte Blockverfahren hinsichtlich des Durchsatzes, der Genauigkeit, des Aufbaus, der Zuverlässigkeit, der Verwendungsmöglichkeiten und/oder der Kosten zu verbessern.

Gemäß einem ersten Erfindungsaspekt wird die zuvor geschilderte Aufgabenstellung durch die Vorrichtung nach Anspruch 8 gelöst. Bevorzugte Ausgestaltungen dieses Erfindungsaspekts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, in Bezug auf die übrigen Erfindungsaspekte entsprechend gelten.

Dies vorausgeschickt, wird im Folgenden die vorliegende Erfindung näher beschrieben.

Die Grundidee des ersten Erfindungsaspekts besteht darin, ein gleichzeitiges Ausrichten mindestens zweier Linsen und ein gleichzeitiges Blocken mindestens zweier Linsen, insbesondere ein gleichzeitiges Verbinden bzw. Fügen der beiden Linsen mit jeweils einem Blockstück, zu realisieren.

Dazu weist die erfindungsgemäße Vorrichtung eine Blockstation auf, die zum zeitlich zumindest teilweise überlappenden Blocken, insbesondere Verbinden bzw. Fügen, mindestens zweier Linsen unmittelbar an bzw. mit jeweils einem mit einem Blockmaterial versehenen Blockstück ausgebildet ist. Außerdem hat die erfindungsgemäße Vorrichtung eine Ausrichtvorrichtung, die zum zeitlich zumindest teilweise überlappenden, lagegeregelten Drehen der Linsen um drei Drehachsen in jeweils eine definierte Drehlage ausgebildet ist. Außerdem hat die erfindungsgemäße Vorrichtung eine Transportvorrichtung, die zum insbesondere zeitlich zumindest teilweise überlappenden Transport der Linsen zu jeweils einem in der Blockstation befindlichen Blockstück und zum Halten der Linsen in der jeweiligen definierten Drehlage ausgebildet ist

Bei "zeitlich zumindest teilweise überlappenden" Vorgängen läuft zumindest ein Zeitabschnitt eines Vorgangs gleichzeitig mit einem Zeitabschnitt eines weiteren Vorgangs ab, wobei die beiden Zeitabschnitte unterschiedlich oder gleich lang sein können. Vorzugsweise wird der eine Vorgang vollständig zu einer Zeit durchgeführt, in der der andere Vorgang durchgeführt wird.

Der Begriff "lagegeregelt" ist hier im Sinne von CNC-Maschinen zu verstehen. Das bedeutet, dass z. B. ein Teil der erfindungsgemäßen Vorrichtung mittels einer CNC-Elektronik automatisiert und geregelt positioniert wird. Typischerweise kontrolliert die CNC-Elektronik mit Hilfe von mehreren ineinander geschachtelten und jeweils für sich geschlossenen Regelkreisen alle für das Positionieren relevanten, zeitlichen Ableitungen des Ortes. Sind mehrere Bewegungsachsen vorhanden, können diese miteinander interpoliert werden.

Die erfindungsgemäße Vorrichtung ermöglicht einen hohen bzw. höheren Durchsatz, d. h. eine hohe bzw. höhere Anzahl an Blockvorgängen pro Zeiteinheit.

Vorzugsweise schneiden sich die drei Drehachsen und/oder stehen zumindest im Wesentlichen senkrecht zueinander.

Vorzugsweise ist die Ausrichtvorrichtung zusätzlich zum zeitlich zumindest teilweise überlappenden, lagegeregelten Bewegen der Linsen entlang einer Linearachse ausgebildet.

Es ist bevorzugt, wenn die Ausrichtvorrichtung zwei Ausrichteinrichtungen aufweist, die jeweils zum lagegeregelten Drehen der Linsen um die drei Drehachsen in die jeweilige definierte Drehlage ausgebildet sind. Vorzugsweise ist jede Ausrichteinrichtung um die drei Drehachsen lagegeregelt drehbar und, optional, lagegeregelt entlang der Linearachse bewegbar. Vorzugsweise stehen die drei Drehachsen senkrecht zueinander.

Vorzugsweise verläuft die Linearachse der Ausrichtvorrichtung parallel oder senkrecht zu den Linearachsen der Transportvorrichtung. Es kann aber auch vorgesehen sein, dass die Linearachse der Ausrichtvorrichtung zumindest eine Linearachse der Transportvorrichtung schneidet oder windschief zu Linearachsen der Transportvorrichtung verläuft. Insbesondere kann die Linearachse der Ausrichtvorrichtung eine Linearachse der Transportvorrichtung in einem Winkel von ca. 5° bis ca. 45°, insbesondere ca. 15°, schneiden.

Bei einer bevorzugten Ausführungsform der erfindungsgemäßen Vorrichtung weist die Blockstation mindestens zwei Blockstückaufnahmen für jeweils ein Blockstück auf. Die Linsen sind in einer Fügeposition der Blockstückaufnahmen mittels der Transportvorrichtung zeitlich zumindest teilweise überlappend mit jeweils einem in der jeweiligen Blockstückaufnahme befindlichen und mit Blockmaterial versehenen Blockstück zu jeweils einem Blockstück-Linsen-Paar lösbar verbindbar. Vorzugsweise sind die Linsen in der Fügeposition der Blockstückaufnahmen mittels der Transportvorrichtung jeweils in bzw. an bzw. gegen das Blockmaterial eines in der jeweiligen Blockstückaufnahme befindlichen und mit Blockmaterial versehenen Blockstücks drückbar. Die jeweilige Linse und das jeweilige Blockstück bleiben voneinander beabstandet, sie liegen also nicht aneinander an. Es verbleibt Blockmaterial zwischen der jeweiligen Linse und dem jeweiligen Blockstück.

Vorteilhafterweise ist die Blockstation mit ihren Blockstückaufnahmen relativ zur Transportvorrichtung bewegbar, insbesondere um eine Drehachse drehbar. Dabei können die Blockstückaufnahmen bewegungsmäßig gekoppelt sein. Vorzugsweise sind die Blockstückaufnahmen mittels Bewegen der Blockstation
- in eine Aufnahmeposition bewegbar, in der jeweils ein Blockstück in jeweils eine Blockstückaufnahme anordenbar und Blockmaterial auf die in den Blockstückaufnahmen befindlichen Blockstücke aufbringbar ist,
- in die Fügeposition bewegbar,
- in eine Ruheposition bewegbar, in der das Blockmaterial der Blockstück-Linsen-Paare zumindest teilweise aushärten kann, und/oder
- in eine Entnahmeposition bewegbar, in der die Blockstück-Linsen-Paare aus den Blockstückaufnahmen entnehmbar sind.

Diese bevorzugte Ausführungsform ermöglicht es, zumindest zwei der Verfahrensschritte "Blockstücke in Blockstückaufnahmen anordnen und Blockmaterial auf die Blockstücke aufbringen", "Fügen", "teilweises Aushärten" und "Blockstück-Linsen-Paare entnehmen" zu parallelisieren. So kann beispielsweise das Blockmaterial zweier Blockstück-Linsen-Paare zumindest teilweise aushärten, ohne dass die Fügeposition von diesen beiden Blockstück-Linsen-Paaren belegt ist. Somit ist ein hoher bzw. höherer Durchsatz erzielbar.

Dies ist besonders effizient bei Einsatz eines thermoplastischen Blockmaterials. Damit das thermoplastische Blockmaterial ohne oder mit zumindest möglichst geringen unerwünschte/n Effekte/n wie Schrumpfungen sowie kostengünstig aushärten kann, lässt man das thermoplastische Blockmaterial typischerweise bei Raumtemperatur ohne aktive Kühlung über mehrere Sekunden, insbesondere mehr als 60 s, abkühlen. Sind mehr als zwei Blockstückaufnahmen vorhanden und in der Blockstation geeignet angeordnet, kann zumindest ein Teil der Abkühlzeit zweier Blockstück-Linsen-Paare genutzt werden, um weitere der zuvor genannten Verfahrensschritte auszuführen, also z. B. weitere Blockstück-Linsen-Paare durch Fügen zu erzeugen.

Bei einer besonders bevorzugten Ausführungsform weist die Blockstation vier Blockstückaufnahmepaare mit jeweils zwei Blockstückaufnahmen auf. Die Blockstück-aufnahmepaare sind so in der bewegbaren Blockstation angeordnet, dass ein erstes Blockstückaufnahmepaar in die Aufnahmeposition bewegbar ist, während ein zweites Blockstückaufnahmepaar in die Fügeposition und ein drittes Blockstückaufnahmepaar in die Ruheposition und ein viertes Blockstückaufnahmepaar in die Entnahmeposition bewegbar ist. Somit können die zuvor genannten Verfahrensschritte zumindest teilweise zeitlich überlappend ausgeführt werden.

Vorzugsweise sind die Transportvorrichtung und die Ausrichtvorrichtung bewegungsmäßig voneinander entkoppelt. Wenn sich die Transportvorrichtung bewegt, bewegt sich die Ausrichtvorrichtung also nicht zwingend mit der Transportvorrichtung. Eine Bewegung der Transportvorrichtung bedingt oder verursacht keine Bewegung der Ausrichtvorrichtung. Dabei kann die Transportvorrichtung zum Entnehmen der Linsen aus der Ausrichtvorrichtung ausgebildet sein. Dazu kann die Transportvorrichtung mindestens zwei Halteköpfe zum Halten der Linsen in der jeweiligen definierten Drehlage aufweisen. Mittels der Ausrichtvorrichtung, insbesondere mittels deren Ausrichteinrichtungen, sind die Linsen dann relativ zum jeweiligen Haltekopf in die jeweilige definierte Drehlage drehbar.

Es hat sich als vorteilhaft erwiesen, wenn die Transportvorrichtung zwei zueinander parallel verlaufende Linearachsen aufweist, vorzugsweise wobei
- eine, insbesondere genau eine, der beiden Linearachsen lagegeregelt ist,
- die Linsen entlang der einen Linearachse insbesondere sequentiell zur Ausrichtvorrichtung und entlang der anderen insbesondere lagegeregelten Linearachse insbesondere zeitlich zumindest teilweise überlappend zu jeweils einem in der Blockstation befindlichen Blockstück bewegbar sind,
- die Transportvorrichtung eine erste Linsenverfahreinrichtung insbesondere mit der einen Linearachse und einer weiteren Linearachse aufweist, wobei mittels der ersten Linsenverfahreinrichtung die Linsen insbesondere sequentiell zur Ausrichtvorrichtung, insbesondere zu deren Ausrichteinrichtungen, bewegbar und in die Ausrichtvorrichtung, insbesondere in deren Ausrichteinrichtungen, ablegbar sind und/oder
- die Transportvorrichtung eine zweite Linsenverfahreinrichtung insbesondere mit der anderen bevorzugt lageregelten Linearachse und einer weiteren bevorzugt lagegeregelten Linearachse aufweist, wobei mittels der zweiten Linsenverfahreinrichtung die Linsen insbesondere zeitlich zumindest teilweise überlappend aus der Ausrichtvorrichtung, insbesondere aus deren Ausrichteinrichtungen, entnehmbar, von der Ausrichtvorrichtung, insbesondere von deren Ausrichteinrichtungen, zu jeweils einem in der Blockstation befindlichen Blockstück, insbesondere zu einem Blockstückaufnahmepaar der Blockstation in dessen Fügepostion, bewegbar und jeweils mit dem jeweiligen mit Blockmaterial versehenen Blockstück zu jeweils einem Blockstück-Linsen-Paar verbindbar sind.

Die Kombination dieser Merkmale ermöglicht eine kostengünstige Parallelisierung der Aufgaben der beiden Linsenverfahreinrichtungen und der Ausrichtvorrichtung und der Blockvorrichtung. So können beispielsweise zwei Blockstück-Linsen-Paare mittels der zweiten Linsenverfahreinrichtung durch Fügen erzeugt werden, während zwei weitere Linsen mittels der zweiten Linsenverfahreinrichtung insbesondere sequentiell zur Ausrichtvorrichtung transportiert und dann dort mittels der Ausrichtvorrichtung ausgerichtet werden.

Vorzugsweise hat die Transportvorrichtung zum Transport der Linsen mehrere Bewegungsachsen, nämlich ausschließlich mehrere Linearachsen und eine Drehachse. Dabei können mehrere der Linearachsen parallel zueinander verlaufen. Bevorzugt hat die Vorrichtung eine, insbesondere genau eine, Zentriereinrichtung zum Zentrieren einer zu blockenden Linse und/oder eine, insbesondere genau eine, vorzugsweise optische Messstation zum Erfassen von Orientierung und Geometrieinformationen einer zu blockenden Linse. Die Transportvorrichtung ist dabei zum insbesondere sequentiellen Transport der Linsen zur Zentriereinrichtung und/oder zur Messstation ausgebildet. Dazu kann die Transportvorrichtung Folgendes aufweisen:
- eine Linsenzuführeinrichtung, mittels der die Linsen insbesondere sequentiell aus einem Vorratsbehälter entnehmbar, von dem Vorratsbehälter zur Zentriereinrichtung bewegbar und in die Zentriereinrichtung ablegbar sind,
- eine Schwenkeinrichtung, mittels der die Linsen insbesondere sequentiell aus der Zentriereinrichtung entnehmbar und von der Zentriereinrichtung zu einer Übergabeposition bewegbar, insbesondere um ca. 180° schwenkbar, sind,
- eine erste Linsenverfahreinrichtung, mittels der die Linsen insbesondere sequentiell aus der Übergabeposition aufnehmbar, zur Messstation bewegbar, in die Messstation ablegbar, aus der Messstation entnehmbar, zur Ausrichtvorrichtung, insbesondere zu deren Ausrichteinrichtungen, bewegbar und in die Ausrichtvorrichtung, insbesondere in deren Ausrichteinrichtungen, ablegbar sind und/oder
- eine zweite Linsenverfahreinrichtung, mittels der die Linsen insbesondere zeitlich zumindest teilweise überlappend aus der Ausrichtvorrichtung, insbesondere aus deren Ausrichteinrichtungen, entnehmbar, von der Ausrichtvorrichtung, insbesondere von deren Ausrichteinrichtungen, zu jeweils einem in der Blockstation befindlichen Blockstück, insbesondere zu einem Blockstückaufnahmepaar der Blockstation in dessen Fügepostion, bewegbar und jeweils mit dem jeweiligen mit Blockmaterial versehenen Blockstück zu jeweils einem Blockstück-Linsen-Paar verbindbar sind.

Diese Ausgestaltung ermöglicht eine kostengünstige Realisierung, da zur Umsetzung einer Parallelisierung nicht alle Einrichtungen doppelt vorgesehen sind, sondern einige Einrichtungen der erfindungsgemäßen Vorrichtung von den Linsen ausschließlich sequentiell belegt werden.

Vorzugsweise weist die Vorrichtung ein Förderband auf, mittels dem ein Vorratsbehälter für Linsen und Blockstücke ausschließlich in eine Richtung bewegbar ist. Bei dieser Ausgestaltung wird der Vorratsbehälter zur Entnahme einer Linse oder eines Blockstücks und zum Einlegen eines Blockstück-Linsen-Paares nicht in entgegengesetzte Richtungen (vor und zurück) verfahren. Dazu ist die Linse an einer anderen Position desselben Vorratsbehälters entnehmbar als das Blockstück und/oder das Blockstück-Linsen-Paar an einer wiederum anderen Position desselben Vorratsbehälters einlegbar.

Gemäß einem zweiten Aspekt wird die zuvor geschilderte Aufgabenstellung durch eine Vorrichtung zum Blocken von Linsen, insbesondere Brillengläsern, gelöst.

Die Vorrichtung gemäß dem zweiten Aspekt hat mindestens zwei Blockstückaufnahmen für ein Blockstück.

Bei einer ersten bevorzugten Ausführungsform der vorschlagsgemäßen Vorrichtung ist die Blockstückaufnahme mittels eines Förderers in eine Aufnahmeposition bewegbar, in der ein Blockstück mittels einer Blockstückzuführeinrichtung in die Blockstückaufnahme ablegbar und Blockmaterial mittels einer Blockmaterialzuführeinrichtung auf das in der Blockstückaufnahme befindliche Blockstück aufbringbar ist. Zusätzlich ist die Blockstückaufnahme mittels des Förderers in eine Fügeposition bewegbar, in der eine Linse mittels einer Transportvorrichtung mit dem in der Blockstückaufnahme befindlichen und mit Blockmaterial versehenen Blockstück zu einem Blockstück-Linsen-Paar lösbar verbindbar ist. Hier wird also das mit Blockmaterial versehene Blockstück in der Blockstückaufnahme zum Blocken transportiert.

Vorzugsweise ist die Vorrichtung so ausgebildet, dass zwei Blockstückaufnahmen mittels des Förderers gleichzeitig von der jeweiligen Aufnahmeposition in die jeweilige Fügeposition bewegbar sind.

Bei einer zweiten bevorzugten Ausführungsform der vorschlagsgemäßen Vorrichtung ist eine Hauptachse der Blockstückaufnahme gegenüber der Vertikalen geneigt. Vorzugsweise hat die Blockstückaufnahme eine Auflage für ein Blockstück, wobei die Normale durch den Mittelpunkt der Auflage gegenüber der Vertikalen geneigt ist. Bevorzugt ist, wenn die Neigung der Blockstückaufnahme bzw. der Auflage veränderbar ist.

Erfindungsgemäß hat die Vorrichtung mindestens zwei Blockstückaufnahmen, wobei zumindest eine Hauptachse einer Blockstückaufnahme gegenüber der Vertikalen eine andere (von Null verschiedene) Neigung aufweist als eine Hauptachse einer anderen Blockstückaufnahme.

Bevorzugt wird für diese Vorrichtung ein Blockstück verwendet, das eine Aufnahmefläche für eine Linse hat, wobei die Normale im Mittelpunkt der Aufnahmefläche des Blockstücks gegenüber der Vertikalen so geneigt und das Blockstück so in eine Blockstückaufnahme eingesetzt wird, dass auf die Aufnahmefläche aufgebrachtes flüssiges Blockmaterial beim Blocken mit einer Linse möglichst gleichmäßig und/oder vollflächig zwischen Linse und Blockstück verteilt ist und/oder nicht von der Aufnahmefläche fließt, insbesondere wobei der Absolutwert der resultierenden Neigung der Normalen im Mittelpunkt der Aufnahmefläche des Blockstücks gegenüber der Vertikalen nicht mehr als ca. 3°, vorzugsweise nicht mehr als ca. 1 ° beträgt. Vorteilhafterweise kann die Blockvorrichtung eine Drehlage des Blockstücks erkennen und entsprechend diesen Anforderungen ändern.

Bei einer dritten bevorzugten Ausführungsform der vorschlagsgemäßen Vorrichtung hat die Vorrichtung Mittel, mittels derer erfassbar ist, ob ein Blockstück in der Blockstückaufnahme insbesondere drehfest angeordnet ist. Die Mittel umfassen insbesondere einen Staudruckmesser.

Gemäß einem dritten Erfindungsaspekt wird die zuvor geschilderte Aufgabenstellung durch ein Verfahren zum Blocken von Linsen, insbesondere Brillengläsern, gemäß Anspruch 1 gelöst. Bevorzugte Ausgestaltungen dieses Erfindungsaspekts sind Gegenstand der diesbezüglichen Unteransprüche.

Das Verfahren gemäß dem dritten Erfindungsaspekt umfasst die folgenden Verfahrensschritte:
a) Mindestens zwei Linsen werden mittels einer Ausrichtvorrichtung zeitlich zumindest teilweise überlappend lagegeregelt in jeweils eine definierte Drehlage gedreht.
b) Die Linsen werden mittels einer Transportvorrichtung insbesondere zeitlich zumindest teilweise überlappend zu jeweils einem in einer Blockstation befindlichen Blockstück bewegt und dabei in der jeweiligen definierten Drehlage gehalten.
c) Die Linsen werden in der Blockstation mittels der Transportvorrichtung zeitlich zumindest teilweise überlappend mit Hilfe eines Blockmaterials unmittelbar mit jeweils einem der Blockstücke zu jeweils einem Blockstück-Linsen-Paar lösbar verbunden.

Schritt a) wird also für beide Linsen zeitlich zumindest teilweise überlappend ausgeführt. Außerdem wird Schritt c) für beide Linsen zeitlich zumindest teilweise überlappend ausgeführt. Schritt c) wird für diese beiden Linsen nach Schritt a) und nach Schritt b) ausgeführt.

Das erfindungsgemäße Verfahren ermöglicht einen hohen bzw. höheren Durchsatz. Bei einer bevorzugten Ausführungsform des erfindungsgemäßen Verfahrens wird/werden:
- mindestens zwei Blockstücke in der Blockstation angeordnet,
- auf diese beiden in der Blockstation befindlichen Blockstücke jeweils ein Blockmaterial aufgebracht, diese beiden mit Blockmaterial versehenen Blockstücke mittels der Blockstation relativ zur Transportvorrichtung in eine Fügeposition bewegt, in der die Linsen zeitlich zumindest teilweise überlappend mit jeweils einem mit Blockmaterial versehenen Blockstück zu jeweils einem Blockstück-Linsen-Paar lösbar verbunden werden, vorzugsweise wobei die Linsen mittels der Transportvorrichtung zeitlich zumindest teilweise überlappend in das Blockmaterial eines der mit Blockmaterial versehenen Blockstücke gedrückt werden,
- die beiden so erzeugten Blockstück-Linsen-Paare mittels der Blockstation relativ zur Transportvorrichtung in eine Ruheposition bewegt, in der das Blockmaterial teilweise aushärtet,
- die beiden Blockstück-Linsen-Paare mittels der Blockstation relativ zur Transportvorrichtung in eine Entnahmeposition bewegt, in der die beiden Blockstück-Linsen-Paare vorzugsweise zeitlich zumindest teilweise überlappend aus der Blockstation entnommen werden und/oder
- die Blockstation um eine Drehachse gedreht.

Vorzugsweise ist vorgesehen, dass zeitlich zumindest teilweise überlappend mit dem lösbaren Verbinden zu Blockstück-Linsen-Paaren
- mindestens ein weiteres Blockstück in der Blockstation angeordnet wird,
- auf dieses weitere in der Blockstation befindliche Blockstück Blockmaterial aufgebracht wird,
- mindestens ein Blockstück-Linsen-Paar zum teilweise Aushärten des Blockmaterials in der Ruheposition verweilt und/oder
- mindestens ein weiteres Blockstück-Linsen-Paar aus der Blockstation entnommen wird.

Insbesondere mit der Kombination dieser Schritte wird ein hoher Grad an Parallelisierung erreicht.

Gemäß einem vierten Aspekt wird die zuvor geschilderte Aufgabenstellung durch eine Blockmaterialzuführeinrichtung gelöst.

Die vorschlagsgemäße Blockmaterialzuführeinrichtung dient zum Zuführen von Blockmaterial für eine Vorrichtung zum Blocken von Linsen, insbesondere Brillengläsern, vorzugsweise für eine Vorrichtung wie zuvor erläutert. Bei Einsatz eines thermoplastischen Blockmaterials zum Blocken von Linsen der in Rede stehenden Art sollen möglichst geringe Mengen an Blockmaterial pro Blockvorgang eingesetzt werden, typtischerweise 2 g bis 30 g. Dies erfordert eine sehr genaue Dosierung. Vor dem Aufbringen auf ein Blockstück muss das Blockmaterial durch Erwärmen auf Mindestens die Schmelztemperatur geschmolzen werden. Bei den in Rede stehenden thermoplastischen Blockmaterialien ist die jeweilige Schmelztemperatur vergleichsweise niedrig, typischerweise zwischen ca. 70° und ca. 90°C. Ist das Blockmaterial geschmolzen, beginnt eine Sedimentation. Dabei lagern sich Schwebstoffe in Blockmaterial ab. Dies kann zu ungewollten veränderten Eigenschaften des Blockmaterials führen. Beim Aufbringen des geschmolzenen Blockmaterials auf ein Blockstück gilt es zu vermeiden, dass zu viel Blockmaterial nachtropft und/oder Fäden zieht.

Die vorschlagsgemäße Blockmaterialzuführeinrichtung ist zum automatisierten Laden eines thermoplastischen Blockmaterials in festem Aggregatzustand, vorzugsweise in Stabform, zum bereichsweisen Erwärmen des thermoplastischen Blockmaterials, vorzugsweise eines vorderen Bereichs des senkrechten Kreiszylinders, und zum dosierten Abgeben des geschmolzenen Blockmaterials ausgebildet.

Die vorschlagsgemäße Blockmaterialzuführeinrichtung erlaubt ein genaues und zuverlässiges Blocken.

Vorzugsweise ist die Blockmaterialzuführeinrichtung zum insbesondere bereichsweisen Abkühlen des in der Blockmaterialzuführeinrichtung befindlichen Blockmaterials ausgebildet.

Die vorschlagsgemäße Blockmaterialzuführeinrichtung ist so ausgebildet, dass die Temperatur des Blockmaterials 3, das auf ein Blockstück 5 aufgebracht ist, das sich in einer Blockstückaufnahmeposition 11 in der Aufnahmeposition befindet, in einem Bereich von ca. 60 °C bis ca. 80 °C liegt.

Gemäß einem fünften Aspekt wird die zuvor geschilderte Aufgabenstellung durch ein Verfahren zum Blocken und Bearbeiten einer Linse gelöst.

Das vorschlagsgemäße Verfahren gemäß dem fünften Aspekt dient zum Blocken und Bearbeiten einer Linse, insbesondere eines Brillenglases. Dabei wird die Linse in einer Blockvorrichtung an einem mit Blockmaterial versehenen Blockstück in einer definierten Drehlage relativ zu dem Blockstück geblockt. Mindestens eine Information zu der definierten Drehlage der Linse wird in elektronischer Form an eine Bearbeitungsvorrichtung übermittelt. Die geblockte Linse wird von der Bearbeitungsvorrichtung unter Berücksichtigung der übermittelten Information zu der definierten Drehlage der Linse bearbeitet.

Die Übermittlung kann drahtlos oder drahtgebunden erfolgen. Sie kann von der Blockvorrichtung und/oder einer anderen Vorrichtung vorgenommen werden.

Die Blockvorrichtung kann wie zum ersten und/oder zweiten Aspekt beschrieben ausgebildet sein.

Vorzugsweise wird die Linse in der Blockvorrichtung um drei Drehachsen lagegeregelt in die definierte Drehlage relativ zu dem Blockstück gedreht.

Es ist bevorzugt, wenn die Bearbeitung der geblockten Linse durch die Bearbeitungsvorrichtung an einer Position gestartet wird, die von der übermittelten Information zur definierten Drehlage der Linse abhängt.

Gemäß einem sechsten Aspekt wird die zuvor geschilderte Aufgabenstellung durch eine Verwendung einer geneigten Blockstückaufnahme zum Blocken einer Linse gelöst.

Gemäß dem sechsten Aspekt wird eine geneigte Blockstückaufnahme zum Blocken einer Linse, insbesondere eines Brillenglases, an einem Blockstück mittels eines Blockmaterials verwendet.

Gemäß einer ersten, unabhängigen Grundidee des sechsten Aspekts weist das Blockstück eine prismatisch verkippte Aufnahmefläche für die Linse auf. Das Blockstück wird beim Blocken derart in der Blockstückaufnahme gehalten, dass die Aufnahmefläche zumindest im Wesentlichen horizontal ausgerichtet ist.

Vorzugsweise wird das Blockstück beim Blocken derart in der Blockstückaufnahme gehalten, dass auf die Aufnahmefläche aufgebrachtes flüssiges Blockmaterial beim Fügen mit einer Linse möglichst gleichmäßig und/oder vollflächig zwischen Linse und Blockstück verteilt ist und/oder nicht von der Aufnahmefläche fließt, insbesondere wobei der Absolutwert der resultierenden Neigung der Normalen im Mittelpunkt der Aufnahmefläche des Blockstücks gegenüber der Vertikalen nicht mehr als 1° beträgt.

Gemäß einer zweiten, unabhängigen Grundidee des sechsten Aspekts weist das Blockstück eine prismatisch verkippte Aufnahmefläche für die Linse auf. Die prismatische Verkippung der Aufnahmefläche ist geringer als ein gewünschtes Prisma der Linse. Beim Bearbeiten der geblockten Linse wird die Differenz zwischen der primatischen Verkippung der Aufnahmefläche und dem gewünschten Prisma der Linse berücksichtigt, so dass das gewünschte Prisma der Linse erzeugt wird. Im Prinzip erfolgt hier eine Kombination aus prismatischer Verkippung der Aufnahmefläche des Blockstücks und prismatischer Bearbeitung der Linse, wobei durch die geneigte Blockstückaufnahme eine günstige Verteilung des Blockmaterials beim Blocken erreicht wird.

Vorzugsweise ist eine Hauptachse der Blockstückaufnahme und/oder die Normale im Mittelpunkt einer Aufnahmefläche des Blockstücks gegenüber der Vertikalen um 1° bis 5° geneigt.

Die Erfindung wird nachfolgend anhand der Beschreibung bevorzugter Ausführungsbeispiele, zum Teil mit Bezugnahmen auf die Zeichnung, näher erläutert.

In der Zeichnung zeigt
- Fig. 1: schematisch eine Draufsicht auf eine bevorzugte Ausführungsform einer erfindungsgemäßen Blockvorrichtung,
- Fig. 2: schematisch in einer perspektivischen Ansicht die Blockvorrichtung aus Fig. 1, wobei eine vereinfachte Darstellung unter Weglassung von Teilen der Blockvorrichtung gewählt wurde,
- Fig. 3: schematisch in einer weiteren perspektivischen Ansicht einen Ausschnitt der Blockvorrichtung aus Fig. 1, wobei wiederum eine vereinfachte Darstellung unter Weglassung von Teilen der Blockvorrichtung gewählt wurde,
- Fig. 4: schematisch in einer Frontansicht einen Ausschnitt einer Blockstation der Blockvorrichtung aus Fig. 1 in einem ersten Zustand, wobei eine vereinfachte Darstellung unter Weglassung von Teilen der Blockvorrichtung gewählt wurde,
- Fig. 5: schematisch in einer perspektivischen Ansicht einen Ausschnitt der Blockstation der Blockvorrichtung aus Fig. 1 in einem zweiten Zustand und
- Fig. 6: schematisch einen Schnitt durch ein Blockstück-Linsen-Paar.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

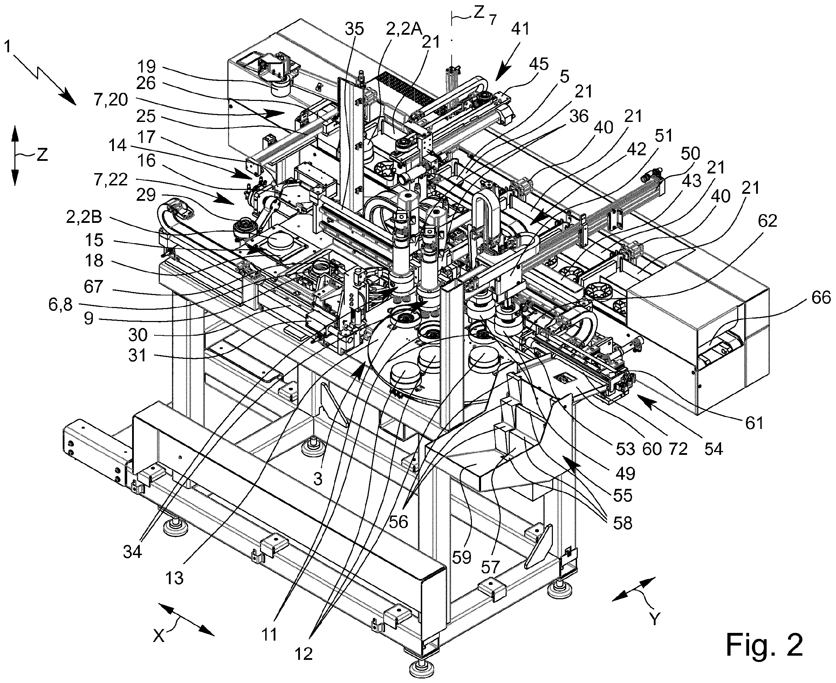

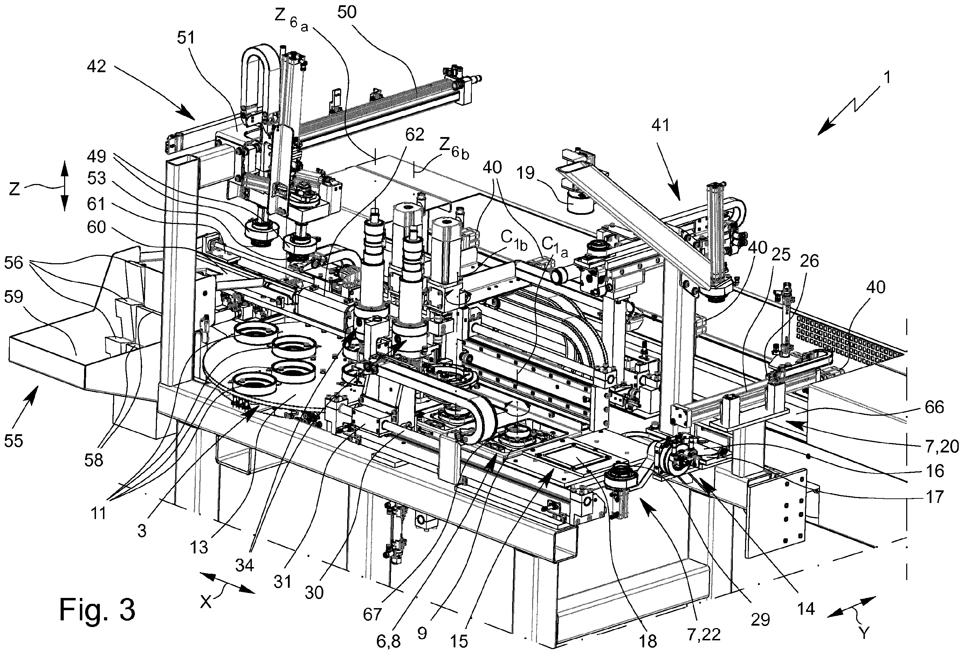

In der nachfolgenden Figurenbeschreibung werden Richtungsangaben verwendet. Diese Richtungsangaben beziehen sich auf das in den Fig. 2 und 3 mit Pfeilen X, Y, Z angedeutete kartesische Koordinatensystem.

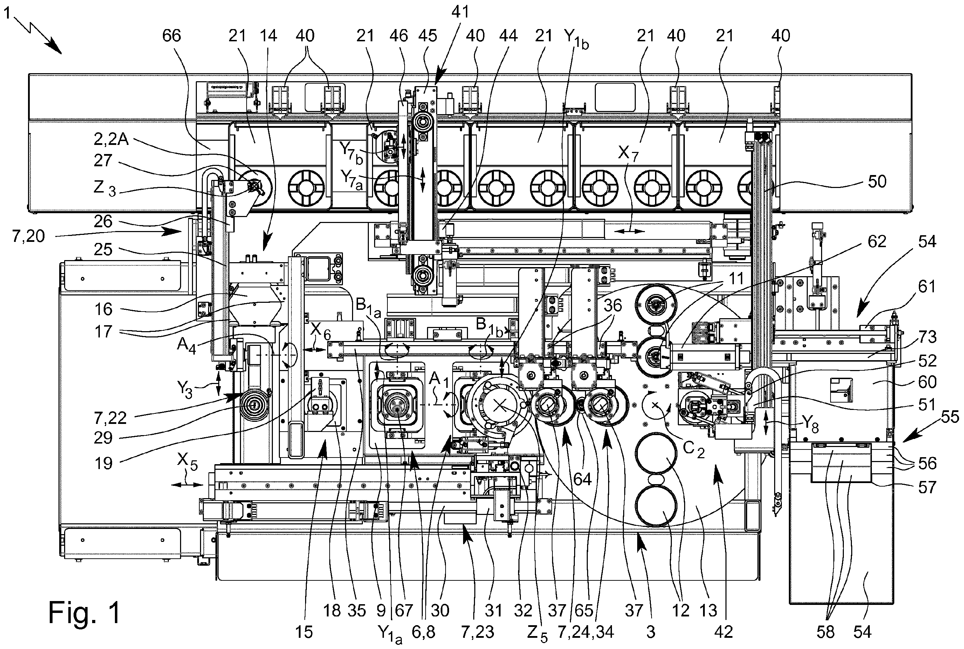

Fig. 1 zeigt schematisch eine Draufsicht auf eine bevorzugte Ausführungsform einer erfindungsgemäßen Vorrichtung 1 zum Blocken von Linsen 2. Die Fig. 2 und 3 zeigen schematisch unterschiedliche perspektivische Ansichten der Blockvorrichtung 1 aus Fig. 1, wobei eine vereinfachte Darstellung unter Weglassung von Teilen der Blockvorrichtung 1 gewählt wurde, um die Sicht auf andere Teile der Blockvorrichtung 1 freizugeben.

Bei dem hier dargestellten und bevorzugten Ausführungsbeispiel handelt es sich bei den Linsen 2 um Brillengläser, also Linsen 2 für eine Brille. Die Linsen 2 bestehen hier aus Kunststoff. Alternativ können sie aus Glas oder dergleichen bestehen. Die Linsen 2 weisen in dem Beispiel einen Durchmesser von mehreren Zentimetern, insbesondere von mehr als 3 cm auf.

Jede Linse 2 hat hier zwei optisch aktive Seiten, nämlich eine bereits fertig abgegossene Blockseite 2A und eine noch zu bearbeitende Bearbeitungsseite 2B. Eine Bearbeitung der Blockseite 2A ist hier weder vor noch nach dem Blocken vorgesehen. Hier ist nur die Bearbeitungsseite 2B zu bearbeiten. Dabei kann es sich um eine sphärische oder asphärische Bearbeitungsseite 2B handeln. In beiden Fällen kann die Blockseite 2A bzw. die Bearbeitungsseite 2B konvex, konkav oder plan sein. Dabei gilt eine Seite als konvex bzw. konkav, wenn sie dem Grunde nach erhaben, also nach außen gewölbt, bzw. vertieft, also nach innen gewölbt, ist.

Auf der Blockseite 2A der Linse 2 kann eine Schutzfolie 73 aufgeklebt sein.

Die erfindungsgemäße Vorrichtung 1 hat eine Blockstation 3, die zum zumindest im Wesentlichen gleichzeitigen Blocken zweier Linsen 2 unmittelbar an jeweils einem mit einem Blockmaterial 4 versehenen Blockstück 5 ausgebildet ist.

Bei dem hier dargestellten und bevorzugten Ausführungsbeispiel wird als Blockmaterial 4 ein Thermoplast eingesetzt, vorzugsweise wie er in der WO 2011/018231 A1 beschrieben ist.

Darüber hinaus hat die erfindungsgemäße Vorrichtung 1 eine Ausrichtvorrichtung 6, die zum zumindest im Wesentlichen gleichzeitigen, lagegeregelten Drehen der Linsen 2 im dreidimensionalen Raum um drei Drehachsen A₁, B₁ₐ bzw. B_{1b}, C₁ₐ bzw. C_{1b} in jeweils eine definierte Drehlage ausgebildet ist. Bei dem hier dargestellten und bevorzugten Ausführungsbeispiel stehen die drei Drehachsen A₁, B₁ₐ bzw. B_{1b}, C₁ₐ bzw. C_{1b} zumindest im Wesentlichen senkrecht zueinander.

Außerdem hat die erfindungsgemäße Vorrichtung 1 eine Transportvorrichtung 7, die zum zumindest im Wesentlichen gleichzeitigen Transport der Linsen 2 zu jeweils einem in der Blockstation 3 befindlichen Blockstück 5 und zum Halten der Linsen 2 in der jeweiligen definierten Drehlage ausgebildet ist.

Bei dem hier dargestellten und bevorzugten Ausführungsbeispiel ist die Ausrichtvorrichtung 6 zusätzlich zum zumindest im Wesentlichen gleichzeitigen, lagegeregelten Bewegen der Linsen 2 entlang einer Linearachse Y₁ₐ bzw. Y_{1b} ausgebildet.

Bei dem hier dargestellten und bevorzugten Ausführungsbeispiel weist die Ausrichtvorrichtung 7 zwei Ausrichteinrichtungen 8 auf. Jede Ausrichteinrichtung 8 ist zum lagegeregelten Drehen einer Linse 2 um die drei Drehachsen A₁, B₁ₐ bzw. B_{1b}, C₁ₐ bzw. C_{1b} in die jeweilige definierte Drehlage ausgebildet. Dazu ist jede Ausrichteinrichtung 8 um die drei Drehachsen A₁, B₁ₐ bzw. B_{1b}, C₁ₐ bzw. C_{1b} lagegeregelt drehbar. Zu diesem Zweck sind für jede Ausrichteinrichtung 8 entsprechende Antriebe, Gelenke und Sensoriken vorgesehen.

Zusätzlich ist jede Ausrichteinrichtung 8 lagegeregelt entlang der Linearachse Y₁ₐ bzw. Y_{1b} bewegbar. Dazu weist jede Ausrichteinrichtung 8 einen Schlitten 9 und eine Führungsschiene 10 auf. Für jeden Schlitten 9 ist ein Antrieb und eine zugeordnete Sensorik vorgesehen. Jeder Schlitten 9 ist auf der jeweiligen Führungsschiene 10 in Y-Richtung verfahrbar. Somit ist mittels des jeweiligen Schlittens 9 die entsprechende Ausrichteinrichtung 8 in Y-Richtung bewegbar.

Bei dem hier dargestellten und bevorzugten Ausführungsbeispiel weist jede Ausrichteinrichtung 8 ein außermittig angeordnetes Fixierelement 67 zur Fixierung einer Linse 2 während des Ausrichtens auf.

Bei dem hier dargestellten und bevorzugten Ausführungsbeispiel weist die Blockstation 3 acht Blockstückaufnahmen 11 für jeweils ein Blockstück 5 auf. Die Linsen 2 sind in einer Fügeposition der Blockstückaufnahmen 11 mittels der Transportvorrichtung 7 zumindest im Wesentlichen gleichzeitig mit jeweils einem in der jeweiligen Blockstückaufnahme 11 befindlichen und mit Blockmaterial 4 versehenen Blockstück 5 zu jeweils einem Blockstück-Linsen-Paar 12 lösbar verbindbar.

Insbesondere sind die Linsen 2 in der Fügeposition der Blockstückaufnahmen 11 mittels der Transportvorrichtung 7 jeweils in bzw. an bzw. gegen das Blockmaterial 4 eines in der jeweiligen Blockstückaufnahme 11 befindlichen und mit Blockmaterial 4 versehenen Blockstücks 5 drückbar. Zwischen der jeweilige Linse 2 und dem jeweilige Blockstück 5 verbleibt ein Spalt, der zumindest teilweise mit dem Blockmaterial 4 gefüllt ist. Der Spalt hat hier eine Höhe von ca. 0,2 mm bis ca. 3 mm, insbesondere von ca. 1 mm bis 2 mm.

Bei dem hier dargestellten und bevorzugten Ausführungsbeispiel ist die Blockstation 3 mit ihren Blockstückaufnahmen 11 relativ zur Transportvorrichtung 7 bewegbar, und zwar um eine Drehachse C₂ drehbar. Die Blockstückaufnahmen 11 sind bewegungsmäßig gekoppelt. Sie sind auf einer Drehscheibe 13 angeordnet, und zwar paarweise, also in vier Blockstückaufnahmepaaren mit jeweils zwei nebeneinander angeordneten Blockstückaufnahmen 11.

Bei dem hier dargestellten und bevorzugten Ausführungsbeispiel sind die Blockstückaufnahmen 11 mittels Bewegen der Blockstation 3 in verschiedene Positionen bewegbar, und zwar
- in eine Aufnahmeposition, in der jeweils ein Blockstück 5 in jeweils eine Blockstückaufnahme 11 anordenbar, insbesondere ablegbar, und Blockmaterial 4 auf die in den Blockstückaufnahmen 11 befindlichen Blockstücke 5 aufbringbar ist,
- in die bereits erwähnte Fügeposition,
- in eine Ruheposition, in der das thermoplastische Blockmaterial 4 der erzeugten Blockstück-Linsen-Paare 12 zumindest teilweise aushärten kann, und
- in eine Entnahmeposition, in der die Blockstück-Linsen-Paare 12 aus den Blockstückaufnahmen 11 entnehmbar sind.

Die Blockstückaufnahmen 11 sind hier so in der bewegbaren Blockstation 3 angeordnet, dass ein erstes Blockstückaufnahmepaar in die Aufnahmeposition bewegbar ist, während ein zweites Blockstückaufnahmepaar in die Fügeposition und ein drittes Blockstückaufnahmepaar in die Ruheposition und ein viertes Blockstückaufnahmepaar in die Entnahmeposition bewegbar ist.

Die Blockstückaufnahmen 11 eines Blockstückaufnahmepaars sind von den Blockstückaufnahmen 11 der anderen Blockstückaufnahmepaare um 90°, 180° bzw. 270° versetzt auf der Drehscheibe 13 angeordnet. Vier der Blockstückaufnahmen 11 liegen auf einem gemeinsamen inneren Radius der Drehscheibe 13. Die anderen vier Blockstückaufnahmen 11 liegen auf einem gemeinsamen äußeren Radius der Drehscheibe 13.

Bei diesem Ausführungsbeispiel können die Verfahrensschritte "Blockstücke 5 in Blockstückaufnahmen 11 anordnen und Blockmaterial auf die Blockstücke 5 aufbringen", "Fügen", "teilweises Aushärten" und "Blockstück-Linsen-Paare 12 entnehmen" gleichzeitig bzw. zeitlich überlappend ausgeführt werden.

In Fig. 1 und 2 befinden sich in den beiden Blockaufnahmen 11 in der Ruheposition jeweils ein Blockstück-Linsen-Paar 12 und in den beiden Blockaufnahmen 11 in der Entnahmeposition jeweils ein anderes Blockstück-Linsen-Paar 12. Die anderen Blockstückaufnahmen 11 sind leer. In Fig. 3 sind alle Blockstückaufnahmen 11 leer.

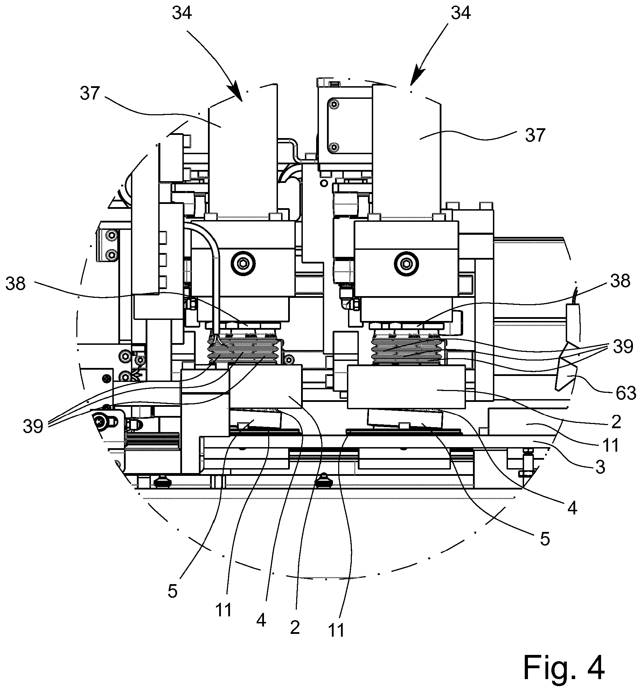

Fig. 4 zeigt schematisch in einer Frontansicht einen Ausschnitt einer Blockstation 3 der Blockvorrichtung 1) aus Fig. 1 in einem Zustand, in dem zwei Linsen 2 in der Fügeposition zweier Blockstückaufnahmen 11 mittels der Transportvorrichtung 7 jeweils in das Blockmaterial 4 eines in der jeweiligen Blockstückaufnahme 11 befindlichen und mit Blockmaterial 4 versehenen Blockstücks 5 gedrückt sind. Zur besseren Übersichtlichkeit ist hier eine jeweilige Umrandung derjenigen Blockstückaufnahmen 11, die sich in der Fügeposition befinden, weggelassen.

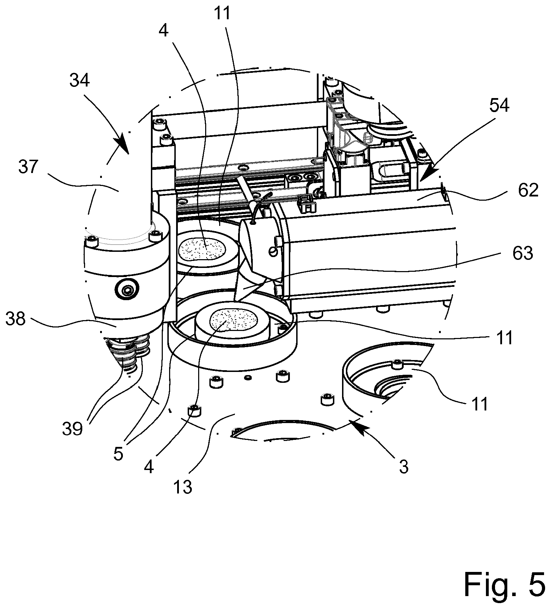

Fig. 5 zeigt schematisch in einer perspektivischen Ansicht einen Ausschnitt der Blockstation 3 der Blockvorrichtung 1 aus Fig. 1 in einem zweiten Zustand, in dem sich zwei mit Blockmaterial 4 versehene Blockstücke 5 in jeweils einer Blockstückaufnahme 11 in deren Aufnahmeposition befinden.

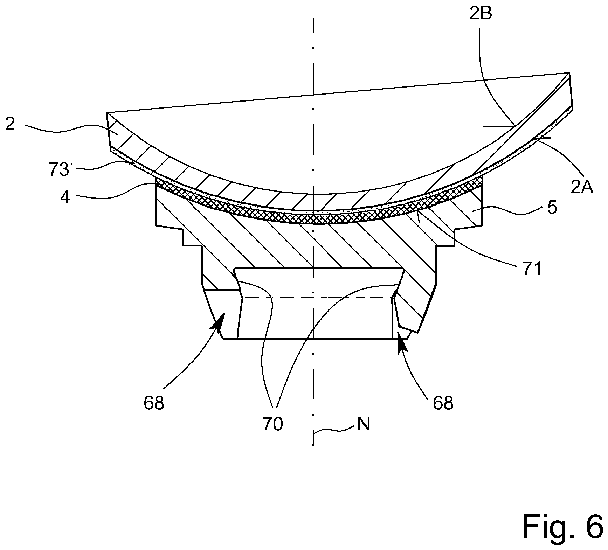

Fig. 6 zeigt schematisch einen Schnitt durch ein Blockstück-Linsen-Paar 12.

Bei dem hier dargestellten und bevorzugten Ausführungsbeispiel hat jede Blockstückaufnahme 11 eine Drehsicherung zur drehsicheren Aufnahme eines Blockstücks 5. Die Drehsicherung kann beispielsweise eine vorzugsweise stangenförmige Auflage und mindestens einen Vorsprung aufweisen, die eine Aufnahme des Blockstücks 5 nur in einer Drehlage um eine C-Achse durch das Blockstück 5 zulassen. Dazu kann das Blockstück 5 wie in Fig. 6 gezeigt ausgebildet sein. Dort hat das Blockstück 5 auf einer Unterseite zwei V-förmige Ausnehmungen 68 und eine rechteckige Aussparung 69. Die Ausnehmungen 68 erlauben das Ablegen des Blockstücks 5 auf der Auflage der Blockstückaufnahme 11 in zwei Drehlagen des Blockstücks 5 um die C-Achse. Die Aussparung 69 des Blockstücks 5 und der entsprechend angeordnete Vorsprung der Blockstückaufnahme 11 beschränken das Ablegen des Blockstücks 5 auf der Auflage der Blockstückaufnahme 11 auf genau eine Drehlage des Blockstücks 5.

In jeder Blockstückaufnahme 11 können federnde Greifarme vorgesehen sein, die beim Ablegen eines Blockstücks 5 in die Blockstückaufnahme 11 hinter eine Hinterschneidung 70 des Blockstücks 5 greifen. Dies erhöht den Halt des Blockstücks 5 in der Blockstückaufnahme 11. Bei der Entnahme eines Blockstück-Linsen-Paares 12 aus der Blockstückaufnahme 11 in der Entnahmeposition werden die Greifarme durch das Hochziehen des Blockstück-Linsen-Paares 12 mittels der Rückführeinrichtung 42 weggedrückt.

Die Vorrichtung 1 kann Mittel aufweisen, um per Staudruckmessung in der Fügeposition der Blockstückaufnahmen 11 zu erfassen, ob sich jeweils ein Blockstück 5 in den Blockstückaufnahmen 11 befindet. Insbesondere kann die Vorrichtung 1 derart ausgebildet sein, dass erfassbar ist, ob ein in der Blockstückaufnahme 11 befindliches Blockstück 5 drehfest angeordnet ist und/oder die Blockstückaufnahme 11 luftdicht abschließt.

Eine oder mehrere Blockstückaufnahme/n können derart ausgebildet sein, dass ihre Hauptachse gegenüber der Vertikalen bzw. der Drehscheibe 13 geneigt ist. Insbesondere kann jede Blockstückaufnahme 11 eine Auflage 74 für ein Blockstück 5 aufweisen, wobei die Normale im Mittelpunkt der Auflage 74 gegenüber der Vertikalen geneigt ist. Beispielsweise kann die Neigung aller Blockstückaufnahmen 11 unveränderlich und/oder gleich und/oder ca. 1° bis 4° betragen.

Bevorzugt wird für diese Vorrichtung 1 ein Blockstück 5 verwendet, das eine Aufnahmefläche 71 für eine Linse 2 hat, wobei die Normale N im Mittelpunkt der Aufnahmefläche 71 des Blockstücks 5 gegenüber der Vertikalen so geneigt und das Blockstück 5 so in eine Blockstückaufnahme 11 eingesetzt wird, dass auf die Aufnahmefläche 71 aufgebrachtes flüssiges Blockmaterial 4 beim Fügen mit einer Linse 2 möglichst gleichmäßig und/oder vollflächig zwischen Linse 2 und Blockstück 5 verteilt ist und/oder nicht von der Aufnahmefläche 71 fließt, insbesondere wobei der Absolutwert der resultierenden Neigung der Normalen N im Mittelpunkt der Aufnahmefläche 71 des Blockstücks 5 gegenüber der Vertikalen nicht mehr als 1° beträgt.

So kann z. B. vorgesehen sein, Blockstücke 5 zu verwenden, deren jeweilige Normale im Mittelpunkt der Aufnahmefläche 71 unterschiedlich geneigt sind, z. B. ca. 1° bis 5°, und/oder die unterschiedliche Radien aufweisen. Hierbei ist es bevorzugt, wenn die Neigung und/oder Drehlage des Blockstücks 5 vorbekannt ist/sind und, optional, das Blockstück 5 der Blockvorrichtung 1 in der vorbekannten Drehlage ausgereichtet zur Verfügung gestellt ist. Alternativ kann die Blockvorrichtung 1 so ausgebildet sein, dass sie das Blockstück 5 um 180° um eine C-Achse drehen kann, um die Neigung des Blockstücks 5 auf die Neigung der Blockstückaufnahme 11 abzustimmen. Wiederum alternativ kann die Blockvorrichtung 1 so ausgebildet sein, dass sie eine Drehlage des Blockstücks 5 erkennt und entsprechend ändern kann, so dass auf die Aufnahmefläche 71 aufgebrachtes flüssiges Blockmaterial 3 beim Blocken mit einer Linse 2 möglichst gleichmäßig und/oder vollflächig zwischen der Linse 2 und dem Blockstück 5 verteilt ist und/oder nicht von der Aufnahmefläche 71 fließt, insbesondere so dass der Absolutwert der resultierenden Neigung der Normalen N im Mittelpunkt der Aufnahmefläche 71 des Blockstücks 5 gegenüber der Vertikalen der Blockstation 3 nicht mehr als ca. 3°, insbesondere nicht mehr als ca. 1° beträgt.

Bei dem hier dargestellten und bevorzugten Ausführungsbeispiel hat die Blockvorrichtung 1 genau eine Zentriereinrichtung 14 zum Zentrieren einer zu blockenden Linse 2 und genau eine optische Messstation 15 zum Erfassen von Orientierung und Geometrieinformationen einer zu blockenden Linse 2.

Die Zentriereinrichtung 14 hat eine Auflage 16 und zwei in X-Richtung gegenläufig verschiebbare Schieber 17, mittels derer eine Linse 2 in eine zentrierte Position geschoben werden kann. Somit können Linsen 2 unterschiedlicher Größe zentriert werden. Der Aufbau der Zentriereinrichtung 14 ist kostengünstig und robust.

Die optische Messstation 15 hat eine Messfläche 18 und eine über der Messfläche 18 angeordnete Kamera 19 und eine unter der Messfläche 18 angeordnete (nicht dargestellte) Beleuchtungsquelle.

Bei dem hier dargestellten und bevorzugten Ausführungsbeispiel ist die Transportvorrichtung 7 zum sequentiellen Transport der Linsen zur Zentriereinrichtung 14 und zur Messstation 15 ausgebildet. Dazu weist die Transportvorrichtung 7 folgende Einrichtungen auf:
- eine Linsenzuführeinrichtung 20, mittels der die Linsen 2 sequentiell aus einem Vorratsbehälter 21 entnehmbar, von dem Vorratsbehälter 21 zur Zentriereinrichtung 14 bewegbar und in die Zentriereinrichtung 14 ablegbar sind,
- eine Schwenkeinrichtung 22, mittels der die Linsen 2 sequentiell aus der Zentriereinrichtung 14 entnehmbar und von der Zentriereinrichtung 14 zu einer Übergabeposition bewegbar, nämlich um ca. 180° schwenkbar, sind,
- eine erste Linsenverfahreinrichtung 23, mittels der die Linsen 2 sequentiell aus der Übergabeposition aufnehmbar, zur Messstation 15 bewegbar, auf die Messfläche 18 der Messstation 15 ablegbar, von der Messfläche 18 aufnehmbar, zur Ausrichtvorrichtung 6, insbesondere zu deren Ausrichteinrichtungen 8, bewegbar und in die Ausrichtvorrichtung 6, insbesondere in deren Ausrichteinrichtungen 8, ablegbar sind, und
- eine zweite Linsenverfahreinrichtung 24, mittels der die Linsen 2 zeitlich zumindest teilweise überlappend aus der Ausrichtvorrichtung 6, insbesondere aus deren Ausrichteinrichtungen 8, entnehmbar, von der Ausrichtvorrichtung 6, insbesondere von deren Ausrichteinrichtungen 8, zu jeweils einem in der Blockstation 3 befindlichen Blockstück 5, insbesondere zu zwei Blockstückaufnahmen 11 der Blockstation 3 in deren Fügepostion, bewegbar und jeweils mit dem jeweiligen mit Blockmaterial 4 versehenen Blockstück 5 zu jeweils einem Blockstück-Linsen-Paar 12 verbindbar sind.

Bei dem hier dargestellten und bevorzugten Ausführungsbeispiel ist die Linsenzuführeinrichtung 20 in Y-Richtung entlang einer Linearachse Y₃ verfahrbar. Dazu weist die Linsenzuführeinrichtung 20 einen auf einer Führungsschiene 25 verfahrbaren Schlitten 26 auf. Außerdem ist die Linsenzuführeinrichtung 20 in Z-Richtung entlang einer Linearachse Z₃ verfahrbar. Dazu hat die Linsenzuführeinrichtung 20 einen pneumatischen Hubzylinder 27. An dem Hubzylinder 27 ist ein Sauger 28 zum Ansaugen einer Linse 2 aus dem Vorratsbehälter 21 und Ablegen einer Linse 2 auf die Auflage 16 der Zentriereinrichtung 14 vorgesehen.

Bei dem hier dargestellten und bevorzugten Ausführungsbeispiel ist der Vorratsbehälter 21 eine Transportkiste mit zwei Nestern für jeweils eine Linse 2 und zwei Nestern für jeweils ein Blockstück 5.

Die Schwenkeinrichtung 22 ist um eine Drehachse A₄ um ca. 180° drehbar. Die Schwenkeinrichtung 22 weist einen Sauger 29 auf, mittels dem eine Linse 2 von der Auflage 16 der Zentriereinrichtung 14 aufnehmbar ist. Mittels der Schwenkeinrichtung 22 kann die Seitenlage einer Linse 2 getauscht werden. So kann der Sauger 29 eine Linse 2 an ihrer in Fig. 2 nach oben weisenden Blockseite 2A aufnehmen und so drehen, dass die Bearbeitungsseite 2B der Linse 2 nach oben weist.

Die erste Linsenverfahreinrichtung 23 ist in X-Richtung entlang einer Linearachse X₅ ohne Lageregelung verfahrbar. Dazu weist die erste Linsenverfahreinrichtung 23 einen auf einem Führungsstab 30 verfahrbaren Schlitten 31 auf. Außerdem ist die erste Linsenverfahreinrichtung 23 in Z-Richtung entlang einer Linearachse Z₅ verfahrbar. Dazu hat die erste Linsenverfahreinrichtung 23 einen pneumatischen Hubzylinder 32. An dem Hubzylinder 32 ist ein Greifer 33 vorgesehen, mittels dem die erste Linsenverfahreinrichtung 23 eine Linse 2 an deren Rand greifen kann. Mittels des Greifers 33 kann die erste Linsenverfahreinrichtung 23 eine Linse 2 vom Sauger 29 der Schwenkeinrichtung 22 in deren Übergabeposition greifen. Die gegriffene Linse 2 kann mittels der ersten Linsenverfahreinrichtung 23 zur Messstation 15 oder zu einer der Ausrichteinrichtungen 8 verfahren werden.

In Fig. 2 sind aus Gründen der Übersichtlichkeit Teile der ersten Linsenverfahreinrichtung 23, insbesondere der Schlitten 31, der Hubzylinder 32 und der Greifer 33 nicht dargestellt.

Die zweite Linsenverfahreinrichtung 24 weist zwei Linsenverfahrmodule 34 auf. Die beiden Linsenverfahrmodule 34 sind bewegungsmäßig nicht gekoppelt, können also unabhängig voneinander verfahren. Beide Linsenverfahrmodule 34 sind in X-Richtung entlang einer gemeinsamen Linearachse X₆ lagegeregelt verfahrbar. Dazu weist die zweite Linsenverfahreinrichtung 24 einen Führungsstab 35 und jedes Linsenverfahrmodul 34 einen verfahrbaren Schlitten 36 auf. Jedes Linsenverfahrmodul 34 ist in Z-Richtung entlang einer Linearachse Z₆ₐ bzw. Z_{6b} lagegeregelt verfahrbar. Dazu weist jedes Linsenverfahrmodul 34 einen pneumatischen Hubzylinder 37 auf. An jedem Hubzylinder 37 ist ein Haltekopf 38 mit drei Saugern 39 zum Ansaugen und Entnehmen einer Linse 2 aus einer zugeordneten Ausrichteinrichtung 8 vorgesehen.

Mittels der Halteköpfe 38 können die Linsen 2 ihrer jeweiligen definierten Drehlage gehalten werden, in die Linsen 2 zuvor mittels der Ausrichtvorrichtung 6 relativ zum jeweiligen Haltekopf 38 gedreht wurden. Dies gilt auch beim Fügen der Linsen 2 mit dem jeweiligen Blockstück 5. Die beim Drücken der Linsen 2 in das Blockmaterial 3 an der Linse 2 auftretenden Kräfte verändern die definierte Drehlage der jeweiligen Linse 2 nicht. Dazu sind in den Saugern 39 (nicht dargestellte) Abstandshalter angeordnet, die die jeweilige Linse 2 drehfest klemmen können.

Mittels der Linsenverfahrmodule 34 sind zwei Linsen 2 zeitlich zumindest teilweise überlappend aus den Ausrichteinrichtungen 8 entnehmbar, zu jeweils einem Blockstück 5 bewegbar, das sich in einer Blockstückaufnahme 11 der Blockstation 3 in der Fügeposition befindet, und in das Blockmaterial 4 des mit Blockmaterial versehenen Blockstücks 5 drückbar zur Erzeugung zweier Blockstück-Linsen-Paare 12. Die Linsenverfahrmodule 34 können dabei so in Z-Richtung verfahren werden, dass zwischen der jeweilige Linse 2 und dem jeweilige Blockstück 5 ein Spalt verbleibt, der zumindest teilweise mit dem Blockmaterial 4 gefüllt ist.

Mittels der zweiten Linsenverfahreinrichtung 24 ist also eine Relativbewegung zwischen einer von der Transportvorrichtung 7 gehaltenen Linse 2 und der Ausrichtstation 6 ausführbar.

Die Linearachse X₅ der ersten Linsenverfahreinrichtung 23 und die Linearachse X₆ der zweiten Linsenverfahreinrichtung 24 verlaufen in Y-Richtung versetzt parallel zueinander. Somit kann ein Linse 2 von der ersten Linsenverfahreinrichtung 23 verfahren werden, während ein oder zwei andere Linsen 2 von der zweiten Linsenverfahreinrichtung 24 verfahren werden.

Die Messfläche 17 der Messstation 15, die beiden Ausrichteinrichtungen 8 und die Blockstückaufnahmen 11 in ihrer Fügeposition sind so angeordnet, dass die Linsen 2 auf der Messfläche 17, in den beiden Ausrichteinrichtungen 8 und in den Blockstückaufnahmen 11 in ihrer Fügeposition sowohl von der ersten Linsenverfahreinrichtung 23 als auch von der (in Y-Richtung versetzten) zweiten Linsenverfahreinrichtung 24 erreichbar sind. Insbesondere verläuft eine Gerade in X-Richtung durch die Messfläche 17, die beiden Ausrichteinrichtungen 8 und die Blockstückaufnahmen 11 in ihrer Fügeposition.

Bei dem hier dargestellten und bevorzugten Ausführungsbeispiel weist die Blockvorrichtung 1 ein Förderband 66 auf, mittels dem mehrere Vorratsbehälter 21 gleichzeitig verfahrbar sind. Jeder Vorratsbehälter 21 kann zwei Linsen 2 und zwei Blockstücke 5 aufnehmen. Das Förderband 66 ist hier ausschließlich in eine Umlaufrichtung bewegbar, so dass die Vorratsbehälter 21 ausschließlich in eine Richtung, in Fig. 1 und 2 von links nach rechts, verfahrbar sind.

Die Vorratsbehälter 21 können entlang des Förderbands 66 an mehreren Positionen angehalten werden. Dazu sind entlang des Förderbands 66 mehrere Stopper 40 angeordnet. So ist eine erste Linsenentnahmeposition vorgesehen, an der die Linsenzuführeinrichtung 20 eine Linse 2 aus dem entsprechenden Vorratsbehälter 21 entnommen werden kann. An einer zweiten Linsenentnahmeposition kann die Linsenzuführeinrichtung 20 eine weitere Linse 2 aus dem entsprechenden Vorratsbehälter 21 entnehmen.

An einer ersten Blockstückentnahmeposition kann eine Blockstückzuführeinrichtung 41 ein Blockstück 5 aus dem entsprechenden Vorratsbehälter 21 entnehmen. An einer zweiten Blockstückentnahmeposition kann die Blockstückzuführeinrichtung 41 ein weiteres Blockstück 5 aus dem entsprechenden Vorratsbehälter 21 entnehmen.

An einer Rückgabeposition kann eine Rückführeinrichtung 42 gleichzeitig zwei Blockstück-Linsen-Paare 12 in denjenigen Vorratsbehälter 21 ablegen, aus dem die Linsen 2 und die Blockstücke 5 der beiden Blockstück-Linsen-Paare 12 entnommen wurden.

Mittels der Blockstückzuführeinrichtung 41 kann ein Blockstück 5 aus einem Vorratsbehälter 21 in der Blockstückentnahmeposition entnommen und in eine Blockstückaufnahme 11 in der Aufnahmeposition abgelegt werden. Die Blockstückzuführ-einrichtung 41 ist in X-Richtung entlang einer Linearachse X₇ verfahrbar. Dazu weist die Blockstückzuführeinrichtung 41 einen auf einem Führungsstab 43 verfahrbaren Schlitten 44 auf. Außerdem ist die Blockstückzuführeinrichtung 41 in Y-Richtung entlang einer Linearachse Y₇ₐ und einer Linearachse Y_{7b} verfahrbar. Dazu weist die Blockstückzuführeinrichtung 41 einen zweiten Schlitten 45, der in Y-Richtung verfahrbar ist, und einen Riemen 46, der am zweiten Schlitten 45 in Y-Richtung verfahrbar ist, auf. Darüber hinaus ist die Blockstückzuführeinrichtung 41 in Z-Richtung entlang einer Linearachse Z₇ verfahrbar. Dazu hat die Blockstückzuführeinrichtung 41 einen pneumatischen Hubzylinder 47. An dem Hubzylinder 47 ist ein Sauger 48 vorgesehen.

Mittels der Rückführeinrichtung 42 können gleichzeitig zwei Blockstück-Linsen-Paare 12 aus zwei Blockstückaufnahmen 11 in deren Entnahmeposition entnommen und zu einem Vorratsbehälter 21 auf dem Förderband 66 transportiert und in den Vorratsbehälter 21 abgelegt werden. Die Rückführeinrichtung 42 hat zwei Halteköpfe 49, die bewegungsmäßig gekoppelt sind. Die Rückführeinrichtung 42 ist in Y-Richtung entlang einer Linearachse Y₈ verfahrbar. Dazu weist die Rückführeinrichtung 42 einen auf einer Führungsschiene 50 verfahrbaren Schlitten 51 auf. Außerdem ist die Rückführeinrichtung 42 in Z-Richtung entlang einer Linearachse Z₈ verfahrbar. Dazu hat die Rückführeinrichtung 42 einen pneumatischen Hubzylinder 52. An jedem Haltekopf 49 ist ein Sauger 53 an einer kardanischen Aufhängung vorgesehen. Jeder Haltekopf 49 ist um eine Drehachse C₈ drehbar, insbesondere um ca. 90°. Dadurch kann ein Blockstück-Linsen-Paar 12 so gedreht werden, dass es in den Vorratsbehälter 21 an der Stelle abgelegt werden kann, an der vorher die Linse 2 des Blockstück-Linsen-Paars 12 lag.

Bei dem hier dargestellten und bevorzugten Ausführungsbeispiel weist die Blockvorrichtung 1 eine Blockmaterialzuführeinrichtung 54 auf. Mittels der Blockmaterialzuführeinrichtung 54 ist sequentiell Blockmaterial 4 auf zwei Blockstücke 5 aufbringbar, die sich in jeweils einer Blockstückaufnahme 11 in deren Aufnahmeposition befinden. Die Blockmaterialzuführeinrichtung 54 ist zum automatisierten Laden eines thermoplastischen Blockmaterials 4 in festem Aggregatzustand, und zwar in Stabform ausgebildet.

Dazu weist die Blockmaterialzuführeinrichtung 54 eine Ladeeinrichtung 55 mit treppenartig angeordneten Ablagen 56, einem zwischen den Ablagen 56 angeordneten und treppenförmigen Heber 57 mit mehreren Stufen 58, einer Ladefläche 59 und einer Zuführfläche 60 auf. Blockmaterialzylinder 4 können auf die geschrägte Ladefläche 59 gelegt werden. Der Schräge der Ladefläche 59 folgend rollen die Blockmaterialzylinder 4 unter eine erste Stufe 58 des Hebers 57. Der Heber 57 ist in Z-Richtung verschiebbar. Durch Schieben des Hebers 57 nach oben werden mehrere Blockmaterialzylinder 4 nach oben zu einer der Ablagen 56 gedrückt. Nach Schieben des Hebers 57 nach unten in die Ausgangsposition rollen die nach oben gedrückten Blockmaterialzylinder 4 unter eine zweite Stufe 58 des Hebers 57. Diese zweite Stufe 58 hat eine geringere Tiefe als die erste Stufe 58. Durch Schieben des Hebers 57 nach oben werden mehrere Blockmaterialzylinder 4, jedoch weniger als zuvor, nach oben zu einer weiteren Ablagen 56 gedrückt. Nach Schieben des Hebers 57 nach unten in die Ausgangsposition rollen die nach oben gedrückten Blockmaterialzylinder 4 unter eine dritte Stufe 58 des Hebers 57. Diese dritte Stufe 58 hat eine geringere Tiefe als die zweite Stufe 58, so dass nur ein Blockmaterialzylinder 4 von der dritten Stufe nach oben gedrückt werden kann. Durch Schieben des Hebers 57 nach oben wird ein Blockmaterialzylinder 4 nach oben zur geschrägten Zuführfläche 60 gedrückt. Der Schräge der Zuführfläche 60 folgend rollt der nach oben gedrückte Blockmaterialzylinder 4 in eine Aufnahme 72 der Blockmaterialzuführeinrichtung 54.

Der Blockmaterialzylinder 4 in der Aufnahme 72 kann mittels eines Schiebers 61 der Blockmaterialzuführeinrichtung 54 abschnittsweise in einen Heizraum 62 der Blockmaterialzuführeinrichtung 54 geschoben werden. In dem Heizraum 62 kann der Blockmaterialzylinder 4 bereichsweise, insbesondere ein vorderer Bereich des Blockmaterialzylinders 4, erwärmt werden, und zwar auf mindestens dessen Schmelztemperatur.

Das geschmolzene Blockmaterial 4 kann mittels einer Düse 63 aus der Blockmaterialzuführeinrichtung 54 dosiert abgegeben werden. Dazu kann der Blockmaterialzylinder 4 mittels des Schiebers 61 weiter in den Heizraum 62 eingeschoben werden, so dass geschmolzenes Blockmaterial 4 aus der Düse 63 abgebbar ist.

Das geschmolzene Blockmaterial 4 im Heizraum 62 kann mittels einer Kühleinrichtung bereichsweise abgekühlt werden.

Die Blockmaterialzuführeinrichtung 54 ist in Y-Richtung entlang einer Linearachse Y₉ verfahrbar. Die Düse 63 der Blockmaterialzuführeinrichtung 54 ist oberhalb der Blockstückaufnahmen 11 in deren Aufnahmeposition angeordnet.

Bei dem hier dargestellten und bevorzugten Ausführungsbeispiel weist die Blockvorrichtung zwei Messtaster 64 auf. Ein Messtaster 64 ist neben der Drehscheibe 13 der Blockstation 3 und der andere Messtaster 64 unterhalb der Drehscheibe 3 angeordnet. Die Messtaster 64 können in Z-Richtung verfahren werden. Für den anderen Messtaster 63 weist die Drehscheibe 13 dazu eine entsprechende Aussparung 65 zwischen zwei Blockstückaufnahmen 11 eines Blockstückaufnahmepaars auf.

Mittels der Messtaster 64 ist bestimmbar, ob der entsprechende Haltekopf eines Linsenverfahrmoduls 34 eine Linse 2 hält oder nicht. Hält der Haltekopf 38 eine Linse 2, können ein mittiger Bereich der gehaltenen Linse 2 ausgemessen, der Radius der gehaltenen Linse 2 und/oder der Abstand vom jeweiligen Messtaster 64 zu einem Punkt auf der Linse 2 bestimmt werden. Diese Werte können beim Drücken der Linse 2 in das Blockmaterial 4 eines Blockstücks 5 berücksichtigt werden.

Die Blockvorrichtung 1 gemäß dem dargestellten und bevorzugten Ausführungsbeispiel ermöglicht einen Durchsatz von ca. 100 bis ca. 180 geblockten Linsen pro Stunde.

Nachfolgend wird eine bevorzugte Ausführungsform des erfindungsgemäßen Verfahrens zum Blocken von Linsen, insbesondere Brillengläsern, erläutert.

Zunächst wird ein Vorratsbehälter 21 mittels des Förderbands 66 an die erste Linsenentnahmeposition verfahren. Die Linsenzuführeinrichtung 20 entnimmt eine Linse 2 aus dem Vorratsbehälter 21. Dabei saugt der Sauger 28 der Linsenzuführeinrichtung 20 an der Blockseite 2A der Linse 2.

Durch Verfahren der Linsenzuführeinrichtung 20 in Z- und Y-Richtung wird die Linse 2 auf die Auflage 16 der Zentriereinrichtung 14 abgelegt. Dort liegend wird die Linse 2 durch Verschieben der Schieber 17 der Zentriereinrichtung 14 zentriert.

Nach dem Zentrieren wird die Schwenkeinrichtung 22 aus ihrer Übergabeposition zur Zentriereinrichtung 14 geschwenkt. Der Sauger 29 der Schwenkeinrichtung 22 saugt die Linse 2 an ihrer Blockseite 2A an und entnimmt sie aus der Zentriereinrichtung 14, indem die Schwenkeinrichtung 22 in ihre Übergabeposition geschwenkt wird. Nun zeigt die Bearbeitungsseite 2B der Linse 2 nach oben.

Währenddessen entnimmt die Linsenzuführeinrichtung 20 eine weitere Linse 2 aus demselben Vorratsbehälter 21. Dazu wurde der Vorratsbehälter 21 mittels des Förderbands 66 zuvor in seine zweite Linsenentnahmeposition verfahren.

Der Greifer 33 der ersten Linsenverfahreinrichtung 23 wird durch Verfahren in X- und Z-Richtung an eine Position oberhalb des Saugers 29 der Schwenkeinrichtung 22 bewegt. Dort wird die Linse 2 vom Greifer 33 gegriffen und der Schwenkeinrichtung 22 entnommen.

Durch Verfahren der ersten Linsenverfahreinrichtung 23 in X- und Z-Richtung wird die Linse 2 auf die Messfläche 18 der Messstation 15 abgelegt. Nach Erfassen von Orientierung und Geometrieinformationen der Linse 2 wird diese Linse 2 durch Verfahren der ersten Linsenverfahreinrichtung 23 in X- und Z-Richtung aus der Messstation 15 entnommen und in eine der Ausrichteinrichtungen 8 abgelegt.

Es ist auch möglich, die Linse 2 durch Verfahren der ersten Linsenverfahreinrichtung 23 in X- und Z-Richtung von der Schwenkeinrichtung 22 direkt in eine der Ausrichteinrichtungen 8 abzulegen, z. B. wenn Orientierung und Geometrieinformationen der Linse 2 entbehrlich sind.

Derweil wurde die weitere Linse 2 zur Zentriereinrichtung 14 verfahren, dort zentriert und von der Schwenkeinrichtung 22 zur Übergabeposition geschwenkt. Der Greifer 33 der ersten Linsenverfahreinrichtung 23 wird durch Verfahren in X- und Z-Richtung wieder an eine Position oberhalb des Saugers 29 der Schwenkeinrichtung 22 bewegt. Dort wird die weitere Linse 2 vom Greifer 33 gegriffen und der Schwenkeinrichtung 22 entnommen.

Die weitere Linse 2 kann zur Messstation 15 verfahren oder direkt in die andere Ausrichteinrichtung 8 abgelegt werden. Nun befindet sich in jeder Ausrichteinrichtung 8 eine Linse 2.

Die Linsen 2 werden mittels der beiden Ausrichteinrichtungen 8 zeitlich zumindest teilweise überlappend ausgerichtet, also lagegeregelt in jeweils eine definierte Drehlage gedreht.

Nachdem die erste Linsenverfahreinrichtung 23 weg von den Ausrichteinrichtungen 8 verfahren wurde (beispielsweise zum Entnehmen einer anderen Linse 2 von der Schwenkeinrichtung 22), werden die Sauger 39 des einen Linsenverfahrmoduls 34 der zweiten Linsenverfahreinrichtung 24 durch Verfahren in X- und Z-Richtung an eine Position oberhalb der einen Linse 2 in der einen Ausrichteinrichtung 8 positioniert. Zeitlich zumindest teilweise überlappend werden die Sauger 39 des anderen Linsenverfahrmoduls 34 der zweiten Linsenverfahreinrichtung 24 durch Verfahren in X- und Z-Richtung an eine Position oberhalb der anderen Linse 2 in der anderen Ausrichteinrichtung 8 positioniert.

Zeitlich zumindest teilweise überlappend entnimmt jedes Linsenverfahrmodul 34 eine Linse aus der jeweiligen Ausrichteinrichtung 8 und verfährt die jeweilige Linse 2 zu einer Position oberhalb des jeweiligen Messtasters 64. Die Messtaster 64 werden in Z-Richtung nach oben an die Blockseite 2A der jeweiligen Linse 2 verfahren. Die Messtaster 64 erfassen den tiefsten Punkt der jeweiligen Linse 2. Die Messtaster 64 werden anschließend in Z-Richtung nach unten verfahren. Die Messtaster 64 können auch ausgelassen werden.

Jedenfalls verfährt jedes Linsenverfahrmodul 34 die jeweilige Linse 2 an eine Position oberhalb einer jeweiligen Blockstückaufnahme 11 eines Blockstückaufnahmepaars an deren Fügeposition. In beiden Blockstückaufnahmen 11 befindet sich jeweils ein Blockstück 5. Auf die Blockstücke 5 wurde zuvor mittels der Blockmaterialzuführeinrichtung 54 Blockmaterial 4 aufgebracht. Die Blockstücke 5 wurden zuvor mittels der Blockstückzuführeinrichtung 41 in die Blockstückaufnahmen 11 in deren Aufnahmeposition abgelegt. Dazu wurde der Vorratsbehälter 21 mittels des Förderbands 66 an die erste Blockstückentnahmeposition verfahren, an der die Blockstückzuführeinrichtung 41 ein erstes Blockstück 5 aus dem Vorratsbehälter 21 entnommen hat. Das Blockstück 5 wurde von der Blockstückzuführeinrichtung 41 in eine der Blockaufnahmen 11 in deren Aufnahmeposition abgelegt. Mittlerweile wurde der Vorratsbehälter 21 mittels des Förderbands 66 an die zweite Blockstückentnahme-position verfahren, an der die Blockstückzuführeinrichtung 41 ein zweites Blockstück aus dem Vorratsbehälter entnommen hat. Das zweite Blockstück 5 wurde von der Blockstückzuführeinrichtung 41 in die andere Blockaufnahme 11 in deren Aufnahmeposition abgelegt. Nach dem Aufbringen des Blockmaterials 4 wurde die Drehscheibe 13 der Blockstation 3 um 90° gedreht, so dass sich die Blockstückaufnahmen 11 mit den mit Blockmaterial 4 versehenen Blockstücken 5 in der Fügeposition befinden.

In der Fügeposition der Blockstückaufnahmen werden beide Linsen 2 mittels der Linsenverfahrmodule 34 zumindest im Wesentlichen gleichzeitig in das Blockmaterial 4 des jeweiligen Blockstücks 5 gedrückt. Hierdurch werden zwei Blockstück-Linsen-Paare 12 erzeugt. In einem vordefinierten Abstand werden die Linsen 2 zum jeweiligen Blockstück 5 gehalten, und zwar für eine Mindestzeit. In dieser Mindestzeit soll das Blockmaterial 4 derart aushärten, dass eine Mindestfestigkeit des Blockmaterials 4 und somit ein Mindesthalt zwischen Linse 2 und Blockstück 5 erreicht wird. Der Mindesthalt ist dadurch gekennzeichnet, dass die Sauger 39 des jeweiligen Haltekopfs 38 vom resultierenden Blockstück-Linsen-Paar 12 gelöst werden können, ohne dass das Blockstück 5 und die Linse 2 voneinander getrennt werden. Die Mindestzeit beträgt typischerweise zwischen ca. 15 s und ca. 45 s.

Nach Ablauf der Mindestzeit wird die Drehscheibe 13 der Blockstation 3 um 90° weitergedreht, so dass sich die Blockstückaufnahmen 11 mit den beiden erzeugten Blockstück-Linsen-Paaren 12 in der Ruheposition befinden. Dort härtet das Blockmaterial 4 während einer Wartezeit weiter aus. Die Wartezeit beträgt typischerweise zwischen ca. 30 s und ca. 60 s.

Nach Ablauf der Wartezeit wird die Drehscheibe 13 der Blockstation 3 um 90° weitergedreht, so dass sich die Blockstückaufnahmen 11 mit den beiden zuvor betrachteten Blockstück-Linsen-Paaren 12 in der Entnahmeposition befinden. Hier werden die beiden Blockstück-Linsen-Paare 12 zumindest im Wesentlichen gleichzeitig mittels der Rückführeinrichtung 42 aus der jeweiligen Blockstückaufnahme 11 entnommen, mittels des jeweiligen Haltekopfs 49 der Rückführeinrichtung 42 um die Drehachse C₈ um 90° gedreht, zu dem Vorratsbehälter 21, aus dem die beiden Linsen 2 und die beiden Blockstücke 5 der beiden Blockstück-Linsen-Paare 12 entnommen wurden, transportiert und in diesen Vorratsbehälter 21 abgelegt. Dies erfolgt insbesondere nachdem zwei andere Blockstücke in zwei andere Blockstückaufnahmen 11 in deren Aufnahmeposition abgelegt wurden und Blockmaterial 4 auf diese beiden anderen Blockstücke 5 aufgebracht wurde.

Nach Entnahme der beiden Blockstück-Linsen-Paare 12 wird die Drehscheibe 13 der Blockstation 3 um 90° weitergedreht, so dass sich die nun leeren Blockstückaufnahmen 11 wieder in der Aufnahmeposition befinden.

Bei dem erfindungsgemäßen Verfahren ist der zeitliche Ablauf der einzelnen Verfahrensschritte abzustimmen. Insbesondere ist der zeitliche Ablauf so abzustimmen, dass die Linsen 2 zum richtigen Zeitpunkt an die richtige Position bewegt werden, insbesondere derart, dass die erste Linsenverfahreinrichtung 23 und die sich die zweite Linsenverfahreinrichtung 24 nicht miteinander kollidieren.

Außerdem ist darauf zu achten, dass der Aufbringen des Blockmaterials 4 auf die Blockstücke 5 rechtzeitig vor dem Drehen der Drehscheibe 13 der Blockstation 3 erfolgt. Das Aufbringen sollte jedoch auch nicht zu früh erfolgen, denn schließlich soll das geschmolzene Blockmaterial 4 auf den Blockstücken 5 nicht zu lange vor dem Fügen abkühlen, da sonst die Gefahr einer instabilen Verbindung zwischen dem Blockstück 5 und der Linse 2 besteht. Vorzugsweise ist der Ablauf so getaktet, dass die Temperatur des Blockmaterials 3, das auf ein Blockstück 5 aufgebracht ist, das sich in einer Blockstückaufnahme 11 in der Fügeposition befindet, direkt vor dem Fügen in einem Bereich von ca. 50 °C bis ca. 70°C liegt. Dies ermöglicht eine hohe Adhäsionskraft (und somit eine stabile Verbindung) zwischen der Linse 2 und dem Blockmaterial 3.

Das Aushärten des Blockmaterials 4 kann mittels einer Wärmebildkamera kontrolliert werden. Es ist auch möglich, das Blockstück 5 vor dem Fügen, vorzugsweise vor dem Aufbringen des Blockmaterials 4, zu erwärmen, um das Aushärten des Blockmaterials 4 zu verlangsamen.

Darüber hinaus ist der zeitliche Ablauf so abzustimmen, dass die Blockstückzuführeinrichtung 41, die Rückführeinrichtung 42 und die Blockmaterialzuführeinrichtung 54 nicht miteinander kollidieren.

Bei der zuvor erläuterten bevorzugten Ausführungsform des erfindungsgemäßen Verfahrens wird eine Information zu der definierten Drehlage der Linsen 2 wird in elektronischer Form an eine Bearbeitungsvorrichtung übermittelt. Die Übermittlung erfolgt drahtgebunden mittels einer Kommunikationseinrichtung der Blockvorrichtung 1.

### Bezugszeichenliste:

- 1: Blockvorrichtung
- 2: Linse
- 2A: Blockseite von 2
- 2B: Bearbeitungsseite von 2
- 3: Bockstation von 1
- 4: Blockmaterial
- 5: Blockstück
- 6: Ausrichtvorrichtung von 1
- 7: Transportvorrichtung von 1
- 8: Ausrichteinrichtung von 6
- 9: Schlitten von 8
- 10: Führungsschiene von 8
- 11: Blockstückaufnahme von 3
- 12: Blockstück-Linsen-Paar
- 13: Drehscheibe von 3
- 14: Zentriereinrichtung von 1
- 15: Messstation von 1
- 16: Auflage von 14
- 17: Schieber von 14
- 18: Messfläche von 15
- 19: Kamera von 15
- 20: Linsenzuführeinrichtung von 7
- 21: Vorratsbehälter
- 22: Schwenkeinrichtung von 7
- 23: erste Linsenverfahreinrichtung von 7
- 24: zweite Linsenverfahreinrichtung von 7
- 25: Führungsschiene von 20
- 26: Schlitten von 20
- 27: Hubzylinder von 20
- 28: Sauger von 20
- 29: Sauger von 22
- 30: Führungsstab von 23
- 31: Schlitten von 23
- 32: Hubzylinder von 23
- 33: Greifer von 23
- 34: Linsenverfahrmodul von 24
- 35: Führungsstab von 24
- 36: Schlitten von 24
- 37: Hubzylinder von 34
- 38: Haltekopf von 34
- 39: Sauger von 34
- 40: Stopper
- 41: Blockstückzuführeinrichtung von 1
- 42: Rückführeinrichtung von 1
- 43: Führungsstab von 41
- 44: erster Schlitten von 41
- 45: zweiter Schlitten von 41
- 46: Riemen von 41
- 47: Hubzylinder von 41
- 48: Sauger von 41
- 49: Haltekopf von 42
- 50: Führungsschiene von 42
- 51: Schlitten von 42
- 52: Hubzylinder von 42
- 53: Sauger von 49
- 54: Blockmaterialzuführeinrichtung
- 55: Ladeeinrichtung von 54
- 56: Ablage von 55
- 57: Heber von 55
- 58: Stufe von 57
- 59: Ladefläche von 55
- 60: Zuführfläche von 55
- 61: Schieber von 54
- 62: Heizraum von 54
- 63: Düse von 54
- 64: Messtaster von 1
- 65: Aussparung in 13
- 66: Förderband von 1
- 67: Fixierelement von 8
- 68: Ausnehmung von 5
- 69: Aussparung von 5
- 70: Hinterschneidung von 5
- 71: Aufnahmefläche von 5
- 72: Aufnahme von 54
- 73: Schutzfolie
- A₁, B₁ₐ, B_{1b}, C₁ₐ, C_{1b}, Y₁ₐ, Y_{1b}: Drehachsen bzw. Linearachse von 6 bzw. 8
- C₂: Drehachsen von 3
- Y₃, Z₃: Linearachsen von 20
- A₄: Drehachsen von 22
- X₅, Z₅: Linearachsen von 23
- X₆, Z₆ₐ, Z_{6b}: Linearachsen von 24
- X₇, Y₇ₐ, Y_{7b}, Z₇: Linearachsen von 41
- Y₈, Z₈, C₈: Linearachsen bzw. Drehachse von 42
- N: Normale im Mittelpunkt von 71

## Patentansprüche

1. Verfahren zum Blocken von Linsen (2), insbesondere Brillengläsern, wobei
- mindestens zwei Linsen (2) mittels einer Ausrichtvorrichtung (6) zeitlich zumindest teilweise überlappend lagegeregelt in jeweils eine definierte Drehlage gedreht werden,
- die Linsen (2) mittels einer Transportvorrichtung (7) zeitlich zumindest teilweise überlappend zu jeweils einem in einer Blockstation (3) befindlichen Blockstück (5) bewegt und dabei in der jeweiligen definierten Drehlage gehalten werden,
- die Linsen (2) in der Blockstation (3) mittels der Transportvorrichtung (7) zeitlich zumindest teilweise überlappend mit Hilfe eines Blockmaterials (4) unmittelbar mit jeweils einem der Blockstücke (5) zu jeweils einem Blockstück-Linsen-Paar (12) lösbar, vorzugsweise stoffschlüssig, verbunden werden, und
- wobei zeitlich zumindest teilweise überlappend mit dem lösbaren Verbinden zu zwei Blockstück-Linsen-Paaren (12) mindestens ein Blockstück-Linsen-Paar (12) zum teilweise Aushärten des Blockmaterials (4) in einer Ruheposition verweilt.

2. Verfahren nach Anspruch 1, wobei
- mindestens zwei Blockstücke (5) in der Blockstation (3) angeordnet werden,
- auf diese beiden in der Blockstation (3) befindlichen Blockstücke (5) jeweils Blockmaterial (4) aufgebracht wird und
- diese beiden mit Blockmaterial (4) versehenen Blockstücke (5) mittels der Blockstation (3) relativ zur Transportvorrichtung (7) in eine Fügeposition bewegt werden, in der die Linsen (2) zeitlich zumindest teilweise überlappend mit jeweils einem mit Blockmaterial (4) versehenen Blockstück (5) zu jeweils einem Blockstück-Linsen-Paar (12) lösbar verbunden werden, vorzugsweise wobei zum lösbaren Verbinden der Linsen (2) mit den Blockstücken (5) die Linsen (2) mittels der Transportvorrichtung (7) zeitlich zumindest teilweise überlappend in das Blockmaterial (4) eines der mit Blockmaterial (4) versehenen Blockstücke (5) gedrückt werden.

3. Verfahren nach Anspruch 2, wobei in der Fügeposition die Linsen (2) zum jeweiligen Blockstück (5) in einem vordefinierten Abstand für eine Mindestzeit gehalten werden, in der das Blockmaterial (4) derart aushärtet, dass eine Mindestfestigkeit des Blockmaterials (4) und somit ein Mindesthalt zwischen der jeweiligen Linse (2) und dem jeweiligen Blockstück (5) erreicht wird.

4. Verfahren nach Anspruch 2 oder 3, wobei die beiden so erzeugten Blockstück-Linsen-Paare (12) mittels der Blockstation (3) relativ zur Transportvorrichtung (7) in eine Ruheposition bewegt werden, in der das Blockmaterial (4) teilweise aushärtet und/oder wobei die beiden Blockstück-Linsen-Paare (12) mittels der Blockstation (3) relativ zur Transportvorrichtung (7) in eine Entnahmeposition bewegt werden, in der die beiden Blockstück-Linsen-Paare (12) vorzugsweise zeitlich zumindest teilweise überlappend aus der Blockstation (3) entnommen werden.

5. Verfahren nach einem der Ansprüche 2 bis 4, wobei während des lösbaren Verbindens der Linsen (2) mit den Blockstücken (5) zu jeweils einem Blockstück-Linsen-Paar (12) das Blockmaterial (4) zweier bereits erzeugter Blockstück-Linsen-Paare (12) in der Ruheposition teilweise aushärtet, zwei weitere Blockstück-Linsen-Paare (12) in der Entnahmeposition entnommen werden und zwei weitere Blockstücke (5) in der Blockstation (3) angeordnet werden.

6. Verfahren nach einem der voranstehenden Ansprüche, wobei die Blockstation (3) um eine Drehachse (C₂) gedreht wird.

7. Verfahren nach einem der voranstehenden Ansprüche, wobei zeitlich zumindest teilweise überlappend mit dem lösbaren Verbinden zu zwei Blockstück-Linsen-Paaren (12) mindestens ein weiteres Blockstück-Linsen-Paar (12) aus der Blockstation (3) entnommen wird und/oder mindestens ein weiteres Blockstück (5) in der Blockstation (3) angeordnet wird, vorzugsweise wobei auf dieses weitere in der Blockstation (3) befindliche Blockstück (5) Blockmaterial (4) aufgebracht wird.

8. Vorrichtung zum Blocken von Linsen (2), insbesondere Brillengläsern, vorzugsweise zur Durchführung des Verfahrens gemäß einem der Ansprüche 1 bis 7,
mit einer Blockstation (3), die zum zeitlich zumindest teilweise überlappenden, vorzugsweise stoffschlüssigen, Verbinden mindestens zweier Linsen (2) unmittelbar mit jeweils einem mit einem Blockmaterial (4) versehenen Blockstück (5) ausgebildet ist,
mit einer Ausrichtvorrichtung (6), die zum zeitlich zumindest teilweise überlappenden, lagegeregelten Drehen der Linsen um drei Drehachsen (A₁, B₁ₐ, B_{1b}, C₁ₐ; C_{1b}) in jeweils eine definierte Drehlage ausgebildet ist,
mit einer Transportvorrichtung (7), die zum zeitlich zumindest teilweise überlappenden Transport der Linsen (2) zu jeweils einem in der Blockstation (3) befindlichen Blockstück (5) und zum Halten der Linsen (2) in der jeweiligen definierten Drehlage ausgebildet ist,
wobei die Blockstation (3) mindestens zwei Blockstückaufnahmen (11) für jeweils ein Blockstück (5) aufweist und in einer Fügeposition der Blockstückaufnahmen (11) die Linsen (2) mittels der Transportvorrichtung (7) zeitlich zumindest teilweise überlappend mit jeweils einem in der jeweiligen Blockstückaufnahme (11) befindlichen und mit Blockmaterial (4) versehenen Blockstück (5) zu jeweils einem Blockstück-Linsen-Paar (12) lösbar verbindbar sind, und
wobei die Blockstückaufnahmen (11) in eine Ruheposition zum teilweise Aushärten des Blockmaterials (4) der Blockstück-Linsen-Paare (12) bewegbar sind.

9. Vorrichtung nach Anspruch 8, wobei die Ausrichtvorrichtung (6) zusätzlich zum zeitlich zumindest teilweise überlappenden, lagegeregelten Bewegen der Linsen (2) entlang einer Linearachse (Y₁ₐ; Y_{1b}) ausgebildet ist und/oder wobei die Ausrichtvorrichtung (6) zwei Ausrichteinrichtungen (8) aufweist, die jeweils zum lagegeregelten Drehen der Linsen (2) um drei Drehachsen (A_{1,} B₁ₐ, B_{1b}, C₁ₐ, C_{1b}) in die jeweilige definierte Drehlage ausgebildet sind, vorzugsweise wobei die beiden Ausrichteinrichtungen (8) zum lagegeregelten Bewegen der Linsen (2) entlang einer Linearachse (Y₁ₐ; Y_{1b}) ausgebildet sind.

10. Vorrichtung nach Anspruch 8 oder 9, wobei in der Fügeposition der Blockstückaufnahmen (11) die Linsen (2) mittels der Transportvorrichtung (7) jeweils in das Blockmaterial (4) eines in der jeweiligen Blockstückaufnahme (11) befindlichen und mit Blockmaterial (4) versehenen Blockstücks (5) drückbar sind.

11. Vorrichtung nach Anspruch 10, wobei die Blockstation (3) mit ihren Blockstückaufnahmen (11) relativ zur Transportvorrichtung (7) bewegbar, vorzugsweise um eine Drehachse (C₂) drehbar, ist und/oder wobei die Blockstückaufnahmen (11) bewegungsmäßig gekoppelt sind.

12. Vorrichtung nach Anspruch 10 oder 11, wobei die Blockstückaufnahmen (11) in eine Aufnahmeposition bewegbar sind, in der jeweils ein Blockstück (5) in jeweils eine Blockstückaufnahme (11) anordenbar und Blockmaterial (4) auf die in den Blockstückaufnahmen (11) befindlichen Blockstücke (5) aufbringbar ist und/oder wobei die Blockstückaufnahmen (11) in die Fügeposition bewegbar sind und/oder wobei die Blockstückaufnahmen (11) in eine Entnahmeposition bewegbar sind, in der die Blockstück-Linsen-Paare (12) aus den Blockstückaufnahmen (11) entnehmbar sind.

13. Vorrichtung nach einem der Ansprüche 10 bis 12, wobei die Transportvorrichtung (7) zum Entnehmen der Linsen (2) aus der Ausrichtvorrichtung (6) ausgebildet ist, wobei die Transportvorrichtung (7) mindestens zwei Halteköpfe (38) zum Halten der Linsen (2) in der jeweiligen definierten Drehlage aufweist und mittels der Ausrichtvorrichtung (6), insbesondere mittels deren Ausrichteinrichtungen (8), die Linsen (2) relativ zum jeweiligen Haltekopf (38) in die jeweilige definierte Drehlage drehbar sind.

14. Vorrichtung nach einem der Ansprüche 10 bis 13, wobei die Transportvorrichtung (7) zwei zueinander parallel verlaufende Linearachsen (X₅, X₆) aufweist, vorzugsweise wobei eine, insbesondere genau eine, der beiden Linearachsen (X₅, X₆) lagegeregelt ist, insbesondere wobei die Linsen entlang der einen Linearachse (X₅) insbesondere sequentiell zur Ausrichtvorrichtung (6) und entlang der anderen insbesondere lagegeregelten Linearachse (X₆) insbesondere zeitlich zumindest teilweise überlappend zu jeweils einem in der Blockstation (3) befindlichen Blockstück (5) bewegbar sind.

15. Vorrichtung nach Anspruch 14, wobei die Transportvorrichtung (7) eine erste Linsenverfahreinrichtung (23) insbesondere mit der einen Linearachse (X₅) und einer weiteren Linearachse (Z₅) aufweist, wobei mittels der ersten Linsenverfahreinrichtung (23) die Linsen (2) insbesondere sequentiell zur Ausrichtvorrichtung (6), insbesondere zu deren Ausrichteinrichtungen (8), bewegbar und in die Ausrichtvorrichtung (6), insbesondere in deren Ausrichteinrichtungen (8), ablegbar sind, und/oder wobei die Transportvorrichtung (8) eine zweite Linsenverfahreinrichtung (24) insbesondere mit der anderen bevorzugt lageregelten Linearachse (X₆) und einer weiteren bevorzugt lagegeregelten Linearachse (Z₆ₐ; Z_{6b}) aufweist, wobei mittels der zweiten Linsenverfahreinrichtung (24) die Linsen (2) insbesondere zeitlich zumindest teilweise überlappend aus der Ausrichtvorrichtung (6), insbesondere aus deren Ausrichteinrichtungen (8), entnehmbar, insbesondere zeitlich zumindest teilweise überlappend von der Ausrichtvorrichtung (6), insbesondere von deren Ausrichteinrichtungen (8), zu jeweils einem in der Blockstation (3) befindlichen Blockstück (5), insbesondere zu einem Blockstückaufnahmepaar der Blockstation (3) in dessen Fügeposition, bewegbar und zeitlich zumindest teilweise überlappend jeweils mit dem jeweiligen mit Blockmaterial (4) versehenen Blockstück (5) zu jeweils einem Blockstück-Linsen-Paar (12) verbindbar sind.

## Claims

1. Method for blocking lenses (2), in particular eyeglass lenses, wherein
- at least two lenses (2) are rotated by means of an aligning apparatus (6) at least partially chronologically overlapping in a position-controlled manner each into a defined rotational position,
- the lenses (2) are moved by means of a transport apparatus (7) at least partially chronologically overlapping each to a respective block piece (5) located in a blocking station (3) and are kept in the respectively defined rotational position,
- the lenses (2) in the blocking station (3) are connected detachably, preferably integrally, by means of the transport apparatus (7) at least partially chronologically overlapping with the aid of a block material (4) each directly with respectively one of the block pieces (5) into one block piece-lens pair (12) each, and
- wherein, at least partially chronologically overlapping with the detachably connecting into two block piece-lens pairs (12), at least one block piece-lens pair (12) pauses in a rest position for partial hardening of the block material (4).

2. Method according to claim 1, wherein
- at least two block pieces (5) are arranged in the blocking station (3),
- block material (4) is applied to each of these two block pieces (5) that are located in the blocking station (3), and
- these two block pieces (5) that are provided with block material (4) are moved by means of the blocking station (3) relative to the transport apparatus (7) into a joining position, in which the lenses (2) are connected, at least partially chronologically overlapping, in a detachable manner each with one block piece (5) that is provided with block material (4) into one block piece-lens pair (12) each, preferably wherein for detachably connecting of the lenses (2) with the block pieces (5), the lenses (2) are pressed by means of the transport apparatus (7) at least partially chronologically overlapping into the block material (4) of a block piece (5) that is provided with block material (4).

3. Method according to claim 2, wherein in the joining position, the lenses (2) are held at a predefined distance to their respective block piece (5) for a minimum time, in which the block material (4) hardens in such a way that a minimum strength of the block material (4) and thus a minimum hold between the respective lens (2) and the respective block piece (5) is achieved.

4. Method according to claim 2 or 3, wherein the two thus generated block piece-lens pairs (12) are moved by means of the blocking station (3) relative to the transport apparatus (7) into a rest position, in which the block material (4) partially hardens and/or wherein the two block piece-lens pairs (12) are moved by means of the blocking station (3) relative to the transport apparatus (7) into a removal position, in which the two block piece-lens pairs (12) preferably at least partially chronologically overlapping are removed from the blocking station (3).

5. Method according to one of claims 2 to 4, wherein during the detachably connecting of the lenses (2) with the block pieces (5) into one block piece-lens pair (12) each, the block material (4) of two already-generated block piece-lens pairs (12) partially hardens in the rest position, two additional block piece-lens pairs (12) are removed in the removal position, and two additional block pieces (5) are arranged in the blocking station (3).

6. Method according to one of the preceding claims, wherein the blocking station (3) is rotated around a rotational axis (C₂).

7. Method according to one of the preceding claims, wherein, at least partially chronologically overlapping with the detachably connecting into two block piece-lens pairs (12), at least one additional block piece-lens pair (12) is removed from the blocking station (3) and/or at least one additional block piece (5) is arranged in the blocking station (3), preferably wherein block material (4) is applied to this additional block piece (5) that is located in the blocking station (3).

8. Apparatus for blocking lenses (2), in particular eyeglass lenses, preferably for implementing the method according to one of claims 1 to 7,
with a blocking station (3), which is designed for the at least partially chronologically overlapping, preferably integral, connecting of at least two lenses (2) directly to respectively one block piece (5) that is provided with a block material (4),
with an aligning apparatus (6), which is designed for at least partially chronologically overlapping, position-controlled rotating of the lenses around three rotational axes (A_{1,} B₁ₐ; B_{1b}, C₁ₐ, C_{1b}) into respectively one defined rotational position each,
with a transport apparatus (7), which is designed for at least partially chronologically overlapping transport of the lenses (2) to one block piece (5) each that is located in the blocking station (3) and for holding the lenses (2) in the respectively defined rotational position,
wherein the blocking station (3) has at least two block piece seats (11) for respectively one block piece (5) each, and in a joining position of the block piece seats (11), the lenses (2) are connectable, at least partially chronologically overlapping, in a detachable manner by means of the transport apparatus (7) with one block piece (5) each, that is located in the respective block piece seat (11) and is provided with block material (4), into one block piece-lens pair (12) each, and
wherein the block piece seats (11) are movable into a rest position for partial hardening of the block material (4) of the block piece-lens pairs (12).

9. Apparatus according to claim 8, wherein the aligning apparatus (6) is designed additionally for at least partially chronologically overlapping, position-controlled moving of the lenses (2) along a linear axis (Y₁ₐ; Y_{1b}) and/or wherein the aligning apparatus (6) has two aligning devices (8), which each are designed for position-controlled rotation of the lenses (2) around three rotational axes (A_{1,} B₁ₐ; B_{1b}, C₁ₐ, C_{1b}) into the respectively defined rotational position, preferably wherein the two aligning devices (8) are designed for position-controlled moving of the lenses (2) along a linear axis (Y₁ₐ; Y_{1b}).

10. Apparatus according to claim 8 or 9, wherein in the joining position of the block piece seats (11), the lenses (2) can be pressed by means of the transport apparatus (7) each into the block material (4) of a block piece (5) that is located in the respective block piece seat (11) and that is provided with block material (4).

11. Apparatus according to claim 10, wherein the blocking station (3) is movable with its block piece seats (11) relative to the transport apparatus (7), preferably is rotatable around a rotational axis (C₂), and/or wherein the block piece seats (11) are coupled with respect to movement.

12. Apparatus according to claim 10 or 11, wherein the block piece seats (11) are movable into a receiving position, in which respectively one block piece (5) can be arranged in respectively one block piece seat (11), and block material (4) can be applied on the block pieces (5) that are located in the block piece seats (11) and/or wherein the block piece seats (11) are movable into the joining position and/or wherein the block piece seats (11) are movable into a removal position, in which the block piece-lens pairs (12) can be removed from the block piece seats (11).

13. Apparatus according to one of claims 10 to 12, wherein the transport apparatus (7) is designed for removing lenses (2) from the aligning apparatus (6), wherein the transport apparatus (7) has at least two retaining heads (38) for holding the lenses (2) in the respectively defined rotational position and wherein by means of the aligning apparatus (6), in particular by means of its aligning devices (8), the lenses (2) are rotatable relative to the respective retaining head (38) into the respectively defined rotational position.

14. Apparatus according to one of claims 10 to 13, wherein the transport apparatus (7) has two linear axes (X₅, X₆) that run parallel to one another, preferably wherein one, in particular precisely one, of the two linear axes (X₅, X₆) is position-controlled, in particular wherein the lenses are moveable along the one linear axis (X₅) in particular sequentially to the aligning apparatus (6) and along the other in particular position-controlled linear axis (X₆) in particular at least partially chronologically overlapping to a respective block piece (5) that is located in the blocking station (3).

15. Apparatus according to claim 14, wherein the transport apparatus (7) has a first lens traversing device (23), in particular with the one linear axis (X₅) and another linear axis (Z₅), wherein by means of the first lens traversing device (23), the lenses (2) are movable in particular sequentially to the aligning apparatus (6), in particular to its aligning devices (8), and can be placed in the aligning apparatus (6), in particular in its aligning devices (8), and/or
wherein the transport apparatus (8) has a second lens traversing device (24) in particular with the other preferred position-controlled linear axis (X₆) and another preferred position-controlled linear axis (Z₆ₐ; Z_{6b}), wherein by means of the second lens traversing device (24), the lenses (2) are removable in particular at least partially chronologically overlapping from the aligning apparatus (6), in particular from its aligning devices (8), are moveable in particular at least partially chronologically overlapping from the aligning apparatus (6), in particular from its aligning devices (8), to one block piece (5) each located in the blocking station (3), in particular to a block piece seat pair of the blocking station (3) in its joining position, and are each connectable, at least partially chronologically overlapping, with the respective block piece (5) that is provided with block material (4) into one block piece-lens pair (12) each.

## Revendications

1. Procédé de blocage de lentilles (2), en particulier de verres de lunettes, dans lequel
- au moins deux lentilles (2) sont tournées au moyen d'un dispositif d'alignement (6) en se chevauchant au moins partiellement dans le temps et en étant réglées en position dans une position de rotation définie respective,
- les lentilles (2) sont déplacées au moyen d'un dispositif de transport (7) en se chevauchant au moins partiellement dans le temps vers respectivement une pièce de blocage (5) se trouvant dans une station de blocage (3) et sont alors maintenues dans la position de rotation définie respective,
- les lentilles (2) sont assemblées dans la station de blocage (3) au moyen du dispositif de transport (7), en se chevauchant au moins partiellement dans le temps, à l'aide d'un matériau de blocage (4), directement à chaque fois à l'une des pièces de blocage (5) pour former à chaque fois une paire pièce de blocage-lentille (12) de manière détachable, de préférence par liaison de matière, et
- dans lequel, en se chevauchant au moins partiellement dans le temps avec l'assemblage détachable en deux paires pièce de blocage-lentille (12), au moins une paire pièce de blocage-lentille (12) reste dans une position de repos pour le durcissement partiel du matériau de blocage (4).

2. Procédé selon la revendication 1, dans lequel
- au moins deux pièces de blocage (5) sont disposées dans la station de blocage (3),
- un matériau de blocage (4) est respectivement appliqué sur ces deux pièces de blocage (5) se trouvant dans la station de blocage (3) et
- ces deux pièces de blocage (5) pourvues de matériau de blocage (4) sont déplacées au moyen de la station de blocage (3) par rapport au dispositif de transport (7) dans une position d'assemblage, dans laquelle les lentilles (2) sont assemblées de manière détachable, en se chevauchant au moins partiellement dans le temps, à chaque fois à une pièce de blocage (5) pourvue de matériau de blocage (4), pour former chaque fois une paire pièce de blocage-lentille (12), de préférence les lentilles (2) étant enfoncées au moyen du dispositif de transport (7), en se chevauchant au moins partiellement dans le temps, dans le matériau de blocage (4) de la pièce de blocage (5) pourvue du matériau de blocage (4), afin d'assembler de manière détachable les lentilles (2) avec les pièces de blocage (5).

3. Procédé selon la revendication 2, dans lequel, dans la position d'assemblage, les lentilles (2) sont maintenues par rapport à la pièce de blocage (5) respective à une distance prédéfinie pendant une durée minimale pendant laquelle le matériau de blocage (4) durcit de telle sorte qu'une résistance minimale du matériau de blocage (4) et donc un maintien minimal entre la lentille (2) respective et la pièce de blocage (5) respective sont atteints.

4. Procédé selon la revendication 2 ou 3, dans lequel les deux paires pièce de blocage-lentille (12) ainsi produites sont déplacées au moyen de la station de blocage (3) par rapport au dispositif de transport (7) dans une position de repos, dans laquelle le matériau de blocage (4) durcit partiellement, et/ou dans lequel les deux paires pièce de blocage-lentille (12) sont déplacées au moyen de la station de blocage (3) par rapport au dispositif de transport (7) dans une position de prélèvement dans laquelle les deux paires pièce de blocage-lentille (12) sont prélevées de la station de blocage (3) de préférence en se chevauchant au moins partiellement dans le temps.

5. Procédé selon l'une des revendications 2 à 4, dans lequel, pendant l'assemblage détachable des lentilles (2) avec les pièces de blocage (5) pour former respectivement une paire pièce de blocage-lentille (12), le matériau de blocage (4) de deux paires pièce de blocage-lentille (12) déjà produites durcit partiellement dans la position de repos, deux autres paires pièce de blocage-lentille (12) sont prélevées dans la position de prélèvement et deux autres pièces de blocage (5) sont disposées dans la station de blocage (3).

6. Procédé selon l'une des revendications précédentes, dans lequel la station de blocage (3) est mise en rotation autour d'un axe de rotation (C₂).

7. Procédé selon l'une des revendications précédentes, dans lequel, en se chevauchant au moins partiellement dans le temps avec l'assemblage détachable pour former deux paires pièce de blocage-lentille (12) , au moins une autre paire pièce de blocage-lentille (12) est prélevée de la station de blocage (3) et/ou au moins une autre pièce de blocage (5) est disposée dans la station de blocage (3), de préférence un matériau de blocage (4) étant appliqué sur cette autre pièce de blocage (5) se trouvant dans la station de blocage (3).

8. Dispositif de blocage de lentilles (2), en particulier de verres de lunettes, de préférence pour la mise en oeuvre du procédé selon l'une des revendications 1 à 7, avec une station de blocage (3) qui est conçue pour l'assemblage par chevauchement au moins partiel dans le temps, de préférence par liaison de matière, d'au moins deux lentilles (2) directement avec respectivement une pièce de blocage (5) pourvue d'un matériau de blocage (4),
avec un dispositif d'alignement (6) qui est conçu pour faire tourner les lentilles autour de trois axes de rotation (A₁, B₁ₐ; B_{1b}, C₁ₐ; C_{1b}) de manière régulée en position, en se chevauchant au moins partiellement dans le temps, dans une position de rotation définie à chaque fois,
avec un dispositif de transport (7) qui est conçu pour le transport des lentilles (2) se chevauchant au moins partiellement dans le temps vers respectivement une pièce de blocage (5) se trouvant dans la station de blocage (3) et pour le maintien des lentilles (2) dans la position de rotation définie respective,
dans lequel la station de blocage (3) présente au moins deux logements de pièce de blocage (11) pour respectivement une pièce de blocage (5) et, dans une position d'assemblage des logements de pièce de blocage (11), les lentilles (2) peuvent être assemblées de manière détachable au moyen du dispositif de transport (7), en se chevauchant au moins partiellement dans le temps, avec respectivement une pièce de blocage (5) se trouvant dans le logement de pièce de blocage (11) respectif et pourvue de matériau de blocage (4) pour former respectivement une paire pièce de blocage-lentille (12), et
dans lequel les logements de pièce de blocage (11) peuvent être déplacés vers une position de repos pour durcir partiellement le matériau de blocage (4) des paires pièce de blocage-lentille (12).

9. Dispositif selon la revendication 8, dans lequel le dispositif d'alignement (6) est en outre conçu pour déplacer les lentilles (2) le long d'un axe linéaire (Y₁ₐ; Y_{1b}) en se chevauchant au moins partiellement dans le temps et en étant régulé en position et/ou dans lequel le dispositif d'alignement (6) présente deux moyens d'alignement (8) , qui sont conçus chacun pour faire tourner les lentilles (2) en position réglée autour de trois axes de rotation (A₁ , B₁ₐ; B_{1b}, C₁ₐ; C_{1b}) dans la position de rotation définie respective, de préférence les deux moyens d'alignement (8) étant conçus pour déplacer les lentilles (2) de manière réglée en position le long d'un axe linéaire (Y₁ₐ; Y_{1b}).

10. Dispositif selon la revendication 8 ou 9, dans lequel, dans la position d'assemblage des logements de pièce de blocage (11), les lentilles (2) peuvent être pressées au moyen du dispositif de transport (7) respectivement dans le matériau de blocage (4) d'une pièce de blocage (5) se trouvant dans le logement de pièce de blocage (11) respectif et pourvue de matériau de blocage (4).

11. Dispositif selon la revendication 10, dans lequel la station de blocage (3) avec ses logements de pièce de blocage (11) est mobile par rapport au dispositif de transport (7), de préférence de manière rotative autour d'un axe de rotation (C₂), et/ou dans lequel les logements de pièce de blocage (11) sont couplés en mouvement.

12. Dispositif selon la revendication 10 ou 11, dans lequel les logements de pièce de blocage (11) peuvent être déplacés dans une position de réception, dans laquelle respectivement une pièce de blocage (5) peut être disposée dans respectivement un logement de pièce de blocage (11) et du matériau de blocage (4) peut être appliqué sur les pièces de blocage (5) se trouvant dans les logements de pièce de blocage (11), et/ou dans lequel les logements de pièce de blocage (11) peuvent être déplacés dans la position d'assemblage, et/ou dans lequel les logements de pièce de blocage (11) peuvent être déplacés dans une position de prélèvement dans laquelle les paires pièce de blocage-lentille (12) peuvent être prélevées dans les logements de pièce de blocage (11).

13. Dispositif selon l'une des revendications 10 à 12, dans lequel le dispositif de transport (7) est conçu pour prélever les lentilles (2) du dispositif d'alignement (6), le dispositif de transport (7) présentant au moins deux têtes de maintien (38) pour maintenir les lentilles (2) dans la position de rotation définie respective et, au moyen du dispositif d'alignement (6), en particulier au moyen de ses moyens d'alignement (8), les lentilles (2) pouvant être tournées par rapport à la tête de maintien (38) respective dans la position de rotation définie respective.

14. Dispositif selon l'une des revendications 10 à 13, dans lequel le dispositif de transport (7) présente deux axes linéaires (X₅, X₆) parallèles entre eux, de préférence l'un, en particulier exactement l'un, des deux axes linéaires (X₅, X₆) étant réglé en position, en particulier les lentilles pouvant être déplacées le long de l'un des axes linéaires (X₅), en particulier de manière séquentielle par rapport au dispositif d'alignement (6) et le long de l'autre axe linéaire (X₆), en particulier réglé en position, en particulier en se chevauchant au moins partiellement dans le temps, par rapport à chaque fois à une pièce de blocage (5) se trouvant dans la station de blocage (3).

15. Dispositif selon la revendication 14, dans lequel le dispositif de transport (7) présente un premier dispositif de déplacement de lentilles (23), en particulier avec l'un des axes linéaires (X₅) et un autre axe linéaire (Z₅), les lentilles (2) pouvant être déplacées au moyen du premier dispositif de déplacement de lentilles (23), en particulier de manière séquentielle, vers le dispositif d'alignement (6), en particulier vers ses moyens d'alignement (8), et pouvant être déposées dans le dispositif d'alignement (6), en particulier dans ses moyens d'alignement (8), et/ou dans lequel le dispositif de transport (8) comporte un deuxième dispositif de déplacement de lentilles (24), en particulier avec l'autre axe linéaire (X₆), de préférence réglé en position, et un autre axe linéaire (Z₆ₐ; Z_{6b}), de préférence réglé en position, les lentilles (2), au moyen du deuxième dispositif de déplacement de lentilles (24), pouvant être prélevées, en particulier en se chevauchant au moins partiellement dans le temps, du dispositif d'alignement (6), en particulier de ses moyens d'alignement (8), pouvant être déplacées, en particulier en se chevauchant au moins partiellement dans le temps, par le dispositif d'alignement (6), en particulier par ses moyens d'alignement (8), vers respectivement une pièce de blocage (5) se trouvant dans la station de blocage (3), en particulier vers une paire de logements de pièces de blocage de la station de blocage (3) dans sa position d'assemblage, et pouvant être assemblées, en se chevauchant au moins partiellement dans le temps, respectivement avec la pièce de blocage (5) respective pourvue de matériau de blocage (4), pour former respectivement une paire pièce de blocage-lentille (12).
